# EUROPEAN PATENT SPECIFICATION

(11) **EP 4 464 526 B1**
(45) Date of publication and mention of the grant of the patent: **21.10.2026**
(21) Application number: 22920674.3
(22) Date of filing: 28.12.2022
(51) Int. Cl.: B60G 21/055, B29C 65/48, B29C 65/56, B29C 65/78, F16F 1/38, B29C 65/32, B29L 31/30, F16F 15/08

(54) **BONDING JIG AND BONDING METHOD**
VERBINDUNGSVORRICHTUNG UND VERBINDUNGSVERFAHREN
GABARIT DE LIAISON ET PROCÉDÉ DE LIAISON

(30) Priority: 11.01.2022 JP 2022002607
(43) Date of publication of application: 20.11.2024
(73) Proprietor: NHK Spring Co., Ltd., Yokohama-shi, Kanagawa 236-0004 (JP)
(72) Inventor: KAJIGAYA, Suguru, Yokohama-shi, Kanagawa 236-0004 (JP); FUJIWARA, Yuuki, Yokohama-shi, Kanagawa 236-0004 (JP)
(74) Representative: Hoffmann Eitle
(86) International application number: PCT/JP2022/048488
(87) International publication number: WO 2023/136159

(56) References cited:
- JP-A- 2006 170 292
- JP-A- 2008 143 376
- JP-A- 2020 083 128
- KR-B1- 101 941 858
- US-A- 5 843 264

## Description

### Field

The present invention relates to a bonding jig and a bonding method.

### Background

A stabilizer used in a vehicle or the like is attached to the vehicle to stabilize the posture of the vehicle. At a connection part of the stabilizer to the body of the vehicle, a bushing is provided as a damping member that reduces vibration or the like of the stabilizer transmitted from a road surface or the like, and the stabilizer and the body of the vehicle are connected via the bushing. The bushing is made using an elastic member such as rubber to suppress the transmission of vibration of the stabilizer to the body. Generally, a bushing bonded to the body of a stabilizer includes two members which are attached to a bonding jig, pressed by the bonding jig, and attached to the body of the stabilizer (see, for example, Patent Literature 1).

### Citation List

### Patent Literature

Patent Literature 1: JP 2008-143376 A

US 5,843,264 A discloses features falling under the preamble of claim 1.

### Summary

### Technical Problem

Incidentally, in the bonding jig, in a case where a gap (clearance) is provided in a holding portion that holds a member in order to enhance the workability and the member is crimped onto the body of a stabilizer, the member is deformed and a part of the member enters the gap to spread out, which reduces the surface pressure on the body of the stabilizer. On the other hand, in a case where a space equivalent to the size of the member is formed as the holding portion, there is no clearance. Thus, it takes time and effort to attach and detach the member to and from the bonding jig, or the member cannot be appropriately attached or detached, which may reduce the workability. The bonding jig is required to ensure the surface pressure of each member of the bushing against the body portion of the stabilizer at the time of bonding, and not to reduce the workability at the time of installing the member on the jig or at the time of detaching the jig after bonding.

The present invention has been made in view of the above, and an object of the present invention is to provide a bonding jig and a bonding method which make it possible to prevent the reduction in workability while a damping member is reliably crimped onto a bonded member. Solution to Problem

To solve the above-described problem and achieve the object, a bonding jig according to the present invention for crimping and bonding first and second members constituting a damping member to a bonded member includes: a first bonding member configured to hold the first member; a second bonding member configured to hold the second member and cover the first bonding member to crimp the first and second members onto the bonded member; and a switching mechanism configured to switch, in a space where the first bonding member holds the first member, between a first state in which a gap is formed between the first bonding member and a part of a side surface of the first member continuous with a crimping surface with the second member and a second state in which the gap is filled to control a position of the first member.

Moreover, in the above-described bonding jig according to the present invention, the first bonding member includes a bottom surface portion on which the first member is placed, and first and second wall portions erected from the bottom surface portion, the switching mechanism includes a spring configured to bias the first and second wall portions in directions away from each other, in the first state, the first and second wall portions are positioned in directions away from each other, and in the second state, the first and second wall portions are brought close to each other according to a load applied when the second bonding member is placed on the first bonding member.

Moreover, in the above-described bonding jig according to the present invention, the first bonding member includes a bottom surface portion on which the first member is placed, and first and second wall portions erected from the bottom surface portion, the switching mechanism includes a hole formed on the first bonding member, and a pin provided on the second bonding member and inserted into the hole when the second bonding member is placed on the first bonding member, in the first state, the first and second wall portions are positioned in directions away from each other, and in the second state, the pin is inserted into the hole to bring the first and second wall portions close to each other.

Moreover, in the above-described bonding jig according to the present invention, the first bonding member includes a bottom surface portion on which the first member is placed, and first and second wall portions erected from the bottom surface portion, the switching mechanism includes a fulcrum portion fixed to the bottom surface portion, an effort point portion configured to move due to a load applied according to a distance between the second bonding member and the first bonding member, and an action portion configured to move in synchronization with a movement of the effort point portion to move the first or second wall portion, the switching mechanism is provided for each of the first and second wall portions, in the first state, the first and second wall portions are positioned in directions away from each other, and in the second state, the first and second wall portions are brought close to each other.

Moreover, in the above-described bonding jig according to the present invention, the fulcrum portion and the effort point portion are connected to each other in the switching mechanism, and the effort point portion and the action portion are connected to each other.

Moreover, in the above-described bonding jig according to the present invention, the fulcrum portion and the action portion are connected by a connecting member in the switching mechanism, and the effort point portion moves to apply a load to the connecting member, and the action portion moves.

Moreover, in the above-described bonding jig according to the present invention, the first bonding member includes a housing portion having a hole shape and configured to accommodate the first member, the switching mechanism includes first and second claw portions, and in the second state, the first and second claw portions are positioned in a gap between the housing portion and the first member to fill the gap.

Moreover, in the above-described bonding jig according to the present invention, the first bonding member includes a housing portion having a hole shape and configured to accommodate the first member, and the switching mechanism includes first and second plates provided to be insertable into and removable from the housing portion and positioned in a gap between the housing portion and the first member.

Moreover, in the above-described bonding jig according to the present invention, the first bonding member includes a bottom surface portion, and first and second holding portions formed by bending a plate-like member, placed on the bottom surface portion with one of bent portions facing each other, and configured to hold the first member, the switching mechanism is a shaft provided at each of bent positions of the first and second holding portions and is configured to rotatably hold the first and second holding portions, in the first state, wall portions erecting from the bottom surface portion in the first and second holding portions are positioned in directions away from each other, and in the second state, the wall portions are brought close to each other according to a load applied when the first member is placed on the first bonding member.

Moreover, in the above-described bonding jig according to the present invention, the first bonding member includes a bottom surface portion on which the first member is placed, and first and second wall portions erected against the bottom surface portion, the switching mechanism includes a first inclined portion extending obliquely downward from the bottom surface portion and configured to movably support the first wall portion, and a second inclined portion extending obliquely downward from a side of the bottom surface portion opposite to the first inclined portion and configured to movably support the second wall portion, in the first state, the first and second wall portions are positioned in directions away from each other, and in the second state, the first and second wall portions are brought close to each other.

Moreover, in the above-described bonding jig according to the present invention, the first bonding member includes a bottom surface portion on which the first member is placed, and first and second wall portions made of a magnetic material and erected from the bottom surface portion, the switching mechanism includes first and second magnetic portions configured to generate magnetic force, in the first state, the first and second wall portions are positioned in directions away from each other, and in the second state, the first and second wall portions are brought close to each other by the magnetic force generated by the first and second magnetic portions.

Moreover, in the above-described bonding jig according to the present invention, the first bonding member includes a bottom surface portion on which the first member is placed, and first and second wall portions erected against the bottom surface portion, the switching mechanism includes a first screw portion having a rotatable rod shape and configured to move the first wall portion in a longitudinal axis direction by rotation, and a second screw portion having a rotatable rod shape and configured to move the second wall portion in the longitudinal axis direction by rotation, in the first state, the first and second wall portions are positioned in directions away from each other by the rotation of the first and second screw portions, and in the second state, the first and second wall portions are brought close to each other by the rotation of the first and second screw portions.

Moreover, in the above-described bonding jig according to the present invention, the first bonding member includes a bottom surface portion on which the first member is placed, and first and second wall portions erected from the bottom surface portion, the switching mechanism includes a link mechanism configured to move first and second support portions configured to respectively support the first and second walls in directions toward each other or in directions away from each other, in the first state, the first and second wall portions are positioned in directions away from each other by movement of the first and second support portions by the link mechanism, and in the second state, the first and second wall portions are brought close to each other by movement of the first and second support portions by the link mechanism.

Moreover, in the above-described bonding jig according to the present invention, the first bonding member includes a bottom surface portion on which the first member is placed, and first and second wall portions erected from the bottom surface portion, the switching mechanism includes a switching surface formed on each of the first and second wall portions, constituting a wall surface facing the bottom surface portion, and configured to form an acute angle with a wall surface facing the first member, in the first state, the switching surfaces come into contact with the bottom surface portion to position the first and second wall portions in directions away from each other, and in the second state, the switching surfaces are spaced from the bottom surface portion to bring the first and second wall portions close to each other.

Moreover, in the above-described bonding jig according to the present invention, the first bonding member includes a bottom surface portion on which the first member is placed, and first and second wall portions erected against the bottom surface portion, the switching mechanism is configured to move the first and second wall portions by blowing air or sucking air, in the first state, the first and second wall portions are positioned in directions away from each other by blowing air, and in the second state, the first and second wall portions are brought close to each other by sucking air.

Moreover, a bonding method for crimping and bonding, to a bonded member, first and second members constituting a damping member by attaching the first and second members to a first bonding member and a second bonding member and placing the second bonding member on the first bonding member, includes: attaching the first member to the first bonding member in a first state in which a gap is formed between the first bonding member and a part of a side surface of the first member continuous with a crimping surface with the second member; disposing a bonded member between the first and second members, placing the second bonding member to which the second member is attached on the first bonding member to bring the first and second members into contact with each other, and making a second state in which the gap is filled to control a position of the first member; and bonding the first and second members to the bonded member by applying a thermocompression process on the first and second members and the bonded member.

### Advantageous Effects of Invention

According to the present invention, it is possible to prevent the reduction in workability while a damping member is reliably crimped onto a bonded member.

### Brief Description of Drawings

FIG. 1 is a perspective view illustrating an example of a stabilizer manufactured in a first embodiment of the present invention.
FIG. 2 is a diagram illustrating a configuration, in the vicinity of a bushing member, of the stabilizer illustrated in FIG. 1.
FIG. 3 is a flowchart illustrating the flow of a bushing bonding process according to the first embodiment.
FIG. 4 is a plan view (part 1) for explanation of a configuration of a bonding jig for bonding a bushing to a body portion in the first embodiment.
FIG. 5 is a perspective view for explanation of a configuration of a bonding jig for bonding a bushing to a body portion in the first embodiment.
FIG. 6 is a plan view (part 2) for explanation of a configuration of a bonding jig for bonding a bushing to a body portion in the first embodiment.
FIG. 7 is a plan view (part 1) for explanation of bonding of a bushing to a body portion in the first embodiment.
FIG. 8 is a perspective view (part 1) for explanation of bonding of a bushing to a body portion in the first embodiment.
FIG. 9 is a plan view (part 2) for explanation of bonding of a bushing to a body portion in the first embodiment.
FIG. 10 is a perspective view (part 2) for explanation of bonding of a bushing to a body portion in the first embodiment.
FIG. 11 is a plan view for explanation of a configuration of a bonding jig for bonding a bushing to a body portion in a second embodiment.
FIG. 12 is a plan view (part 1) for explanation of a configuration of a bonding jig for bonding a bushing to a body portion in a third embodiment.
FIG. 13 is a plan view (part 2) for explanation of a configuration of a bonding jig for bonding a bushing to a body portion in the third embodiment.
FIG. 14 is a plan view (part 1) for explanation of a configuration of a bonding jig for bonding a bushing to a body portion in a fourth embodiment.
FIG. 15 is a plan view (part 2) for explanation of a configuration of a bonding jig for bonding a bushing to a body portion in the fourth embodiment.
FIG. 16 is a plan view for explanation of a configuration of a bonding jig for bonding a bushing to a body portion in a fifth embodiment.
FIG. 17 is a plan view for explanation of a configuration of a bonding jig for bonding a bushing to a body portion in a sixth embodiment.
FIG. 18 is a plan view (part 1) for explanation of a configuration of a bonding jig for bonding a bushing to a body portion in a seventh embodiment.
FIG. 19 is a plan view (part 2) for explanation of a configuration of a bonding jig for bonding a bushing to a body portion in the seventh embodiment.
FIG. 20 is a plan view for explanation of a configuration of a bonding jig for bonding a bushing to a body portion in an eighth embodiment.
FIG. 21 is a plan view illustrating a configuration of the bonding jig viewed from a direction of an arrow A illustrated in FIG. 20.
FIG. 22 is a plan view for explanation of a configuration of a bonding jig for bonding a bushing to a body portion in a ninth embodiment.
FIG. 23 is a plan view for explanation of a configuration of a bonding jig for bonding a bushing to a body portion in a tenth embodiment.
FIG. 24 is a plan view for explanation of a configuration of a bonding jig for bonding a bushing to a body portion in an eleventh embodiment.
FIG. 25 is a plan view for explanation of a configuration of a bonding jig for bonding a bushing to a body portion in a twelfth embodiment.
FIG. 26 is a plan view for explanation of a configuration of a bonding jig for bonding a bushing to a body portion in a thirteenth embodiment.
FIG. 27 is a plan view for explanation of a configuration of a bonding jig for bonding a bushing to a body portion in a fourteenth embodiment.
FIG. 28 is a perspective view for explanation of a configuration of a bushing member in a fifteenth embodiment.

### Description of Embodiments

Hereinafter, modes for carrying out the present invention (referred to as "embodiments" below) will be described with reference to the accompanying drawings. Note that the drawings are schematic, and the relationship between the thickness and the width of each portion, the thickness ratio of each portion, and the like may be different from actual ones, and portions having different dimensional relationships and ratios are sometimes included between the drawings.

### (First Embodiment)

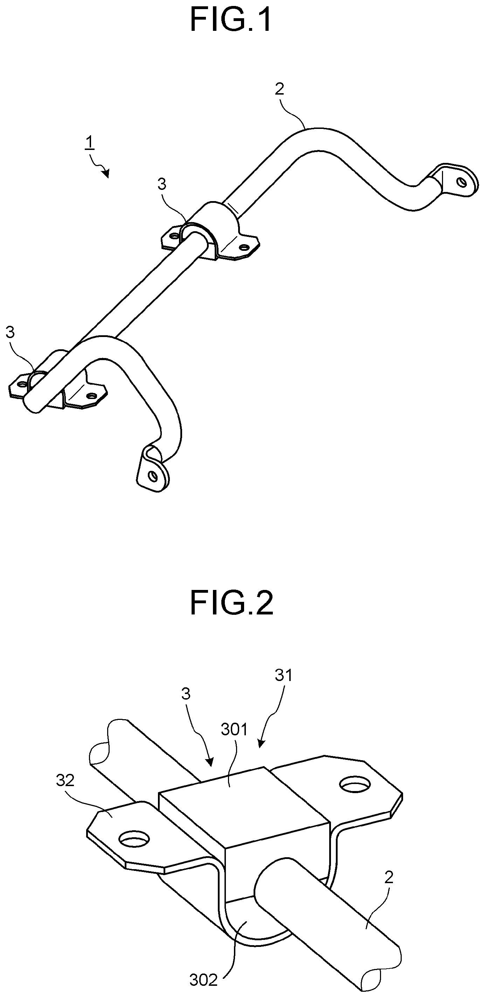

FIG. 1 is a perspective view illustrating an example of a stabilizer manufactured in the first embodiment of the present invention. FIG. 2 is a diagram illustrating a configuration, in the vicinity of a bushing member, of the stabilizer illustrated in FIG. 1. A stabilizer 1 is made of a metal or various fibers (for example, carbon fibers). The stabilizer 1 includes a body portion 2 having both ends bent and a central portion extending linearly, and a bushing member 3 attached to the body portion 2.

The body portion 2 extends in a columnar shape, for example, a cylindrical shape, and both ends thereof are bent. The body portion 2 may be solid or hollow.

For example, in a case where the stabilizer 1 is provided in an automobile, one end of the stabilizer 1 is connected to one suspension of suspensions located at the left and right, and the other end of the stabilizer 1 is connected to the other suspension. At this time, each end is fixed to the suspension via a through hole. The stabilizer 1 is fixed also to the vehicle body via the bushing member 3.

The stabilizer 1 is produced by processing a base material. For example, a columnar base material is bent, and then, both ends are pressurized to form a planar shape, and a through hole is formed at each end.

The bushing member 3 includes a bushing 31 and a bracket 32.

The bracket 32 is attached to the vehicle body via a screw or the like to support the body portion 2 via the bushing 31.

The bushing 31 is made using an elastic material such as rubber or an elastic resin, and functions as a damping member that reduces vibration or the like of the stabilizer 1 transmitted from a road surface or the like. The bushing 31 includes two members (a first member 301 and a second member 302). The bushing 31 is formed by sandwiching the body portion 2 between the first member 301 and the second member 302 and bonding the first member 301 and the second member 302 to the body portion 2.

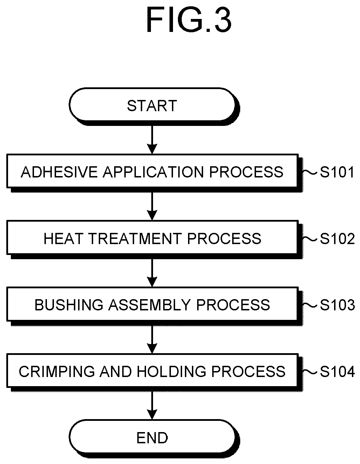

Next, a bonding process of bonding the bushing 31 to the body portion 2 will be described with reference to FIG. 3. FIG. 3 is a flowchart illustrating the flow of a bushing bonding process according to the first embodiment.

First, an adhesive is applied to the first member 301 and the second member 302 (Step S101: adhesive application process). In Step S101, the adhesive is applied to surfaces of the first member 301 and the second member 302 to be bonded to the body portion. After the adhesive is applied, the first member 301 and the second member 302 are subjected to a drying process. Then, the first member 301 and the second member 302 are set in a bonding jig. The bonding jig will be described later.

After the adhesive is applied, a heat treatment is applied to the bonded portion of the bushing 31 in the body portion 2 (Step S102: heat treatment process). In the heat treatment, for example, an IH coil is used to heat a region including the bonded portion of the bushing 31 in the body portion 2. In the heat treatment, the body portion 2 is heated by applying heat for about several tens of seconds, for example. The temperature for the heat treatment is appropriately set according to the type of the bushing 31 or the adhesive.

Before the heat treatment, the body portion 2 may be subjected to a surface treatment for improving the adhesiveness by plasma treatment.

Then, the first member 301 and the second member 302 are set in the bonding jig, and a bushing assembly process is performed on the body portion 2 (Step S103: bushing assembly process). In the bushing assembly process, a load for crimping the first member 301 and the second member 302 onto the body portion 2 is applied by the bonding jig.

The order of the heat treatment process and the bushing assembly process may be reversed.

After the bonding jig is assembled to the body portion 2, a crimping and holding process for bonding the bushing 31 to the body portion 2 is performed (Step S104: crimping and holding process). In the crimping and holding process, the assembled state is held for the time it takes to complete the bonding, for example. At this time, the body portion 2 and the bushing 31 are bonded to each other by the pressure and the heat of the body portion 2. Examples of the bonding mode include vulcanization bonding.

Then, the bonding jig is removed from the bushing 31, so that the stabilizer 1 in which the bushing 31 is fixed to the body portion 2 is obtained. The bracket 32 is attached to the bushing 31.

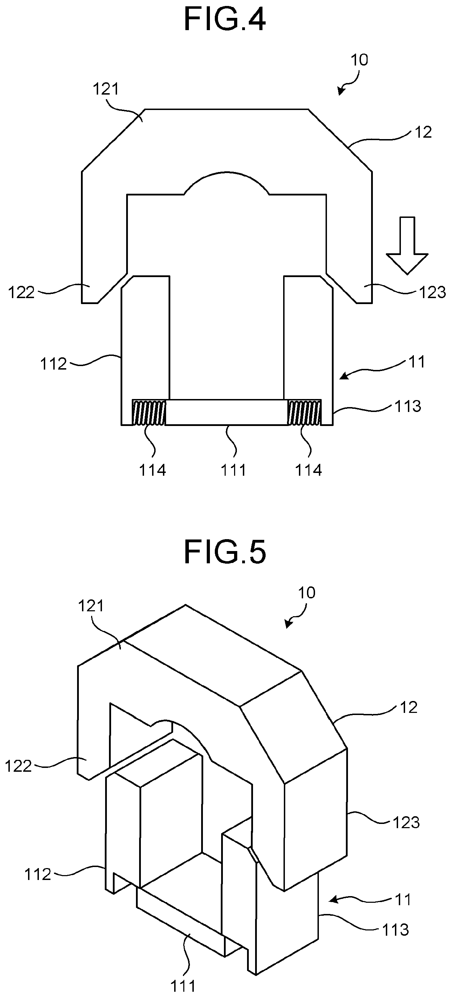

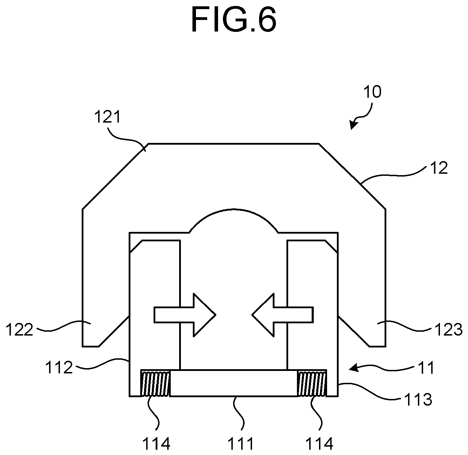

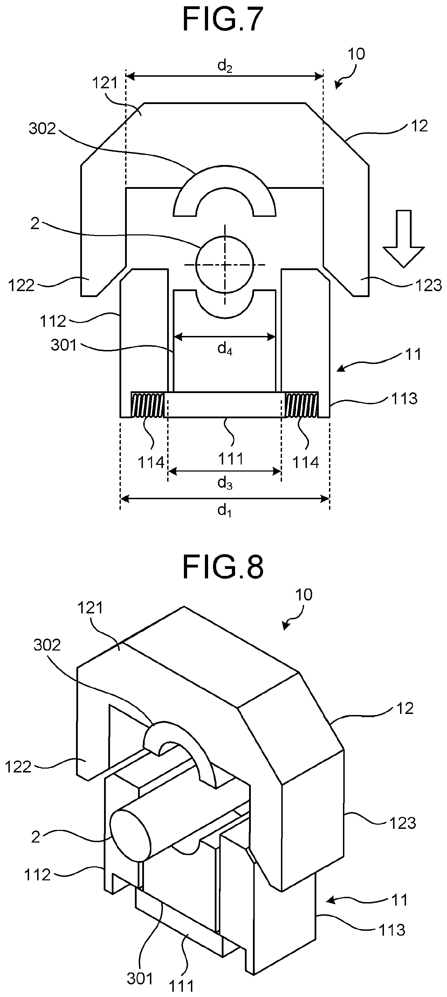

Next, the bonding jig will be described with reference to FIGS. 4 to 10. FIGS. 4, 6, 7, and 9 are plan views for explanation of a configuration of a bonding jig for bonding a bushing to a body portion in the first embodiment. FIGS. 5, 8, and 10 are perspective views for explanation of a configuration of a bonding jig for bonding a bushing to a body portion in the first embodiment. FIGS. 4 to 6 are diagrams illustrating only a bonding jig. FIGS. 7 to 10 are diagrams illustrating a bonding jig to which first and second members of a bushing are attached.

A bonding jig 10 includes a first bonding member 11 and a second bonding member 12. In the bonding jig 10, the first member 301 and the second member 302 are cramped onto the body portion 2 by covering the first bonding member 11 with the second bonding member 12. At this time, for example, an air cylinder is used to pressurize the first bonding member 11 and the second bonding member 12.

The first bonding member 11 includes a bottom surface portion 111 on which the first member 301 is placed, a first wall portion 112 and a second wall portion 113 which are erected, with respect to the bottom surface portion 111, from both ends of the bottom surface portion 111, and coil springs 114 which bias the wall portions in directions away from the bottom surface portion 111.

The second bonding member 12 includes a body portion 121 that holds the second member 302, and a first wall portion 122 and a second wall portion 123 that are erected, with respect to the body portion 121, from both ends of the body portion 121.

Here, in a state where no load from the second bonding member 12 is placed on the first bonding member 11, a distance between an outer wall of the first wall portion 112 and an outer wall of the second wall portion 113 is denoted by d₁, a distance between an inner wall of the first wall portion 122 and an inner wall of the second wall portion 123 is denoted by d₂, a distance between an inner wall of the first wall portion 112 and an inner wall of the second wall portion 113 is denoted by d₃, and a width of the first member 301 is denoted by d₄ (see FIG. 7). The distance d₁ is greater than the distance d₂, and the distance d₃ is greater than the width d₄. In addition, the difference (d₁ - d₂) between the distance d₁ and the distance d₂ is set to be substantially equal to the difference (d₃ - d₄) between the distance d₃ and the width d₄, for example. By setting the difference (d₁ - d₂) and the difference (d₃ - d₄) to be substantially equal, when the first bonding member 11 is covered with the second bonding member 12, a distance between the inner wall of the first wall portion 112 and the inner wall of the second wall portion 113 is set to be substantially equal to the width d₄, and the first wall portion 112 and the second wall portion 113 are brought into contact with or pressed into contact with the first member 301.

In the bonding jig 10, when the second bonding member 12 is placed on the first bonding member 11 (see FIG. 4), the first wall portion 122 and the second wall portion 123 come into contact with the first wall portion 112 and the second wall portion 113, respectively, which moves the first wall portion 112 and the second wall portion 113 toward the bottom surface portion 111. As a result, the distance (corresponding to the distance d₃) between the first wall portion 112 and the second wall portion 113 is shortened. The contact portions of the first wall portions 112 and 122 and the second wall portions 113 and 123 each have a tapered shape formed by chamfering corner portions, and, at the time of contact, the first wall portion 112 and the second wall portion 113 can be moved while being accommodated in the second bonding member 12. The tapered shape may be formed on at least one of the wall portions in contact with each other. For example, as long as one of the first wall portions 112 and 122 has a tapered shape, smooth operation can be achieved.

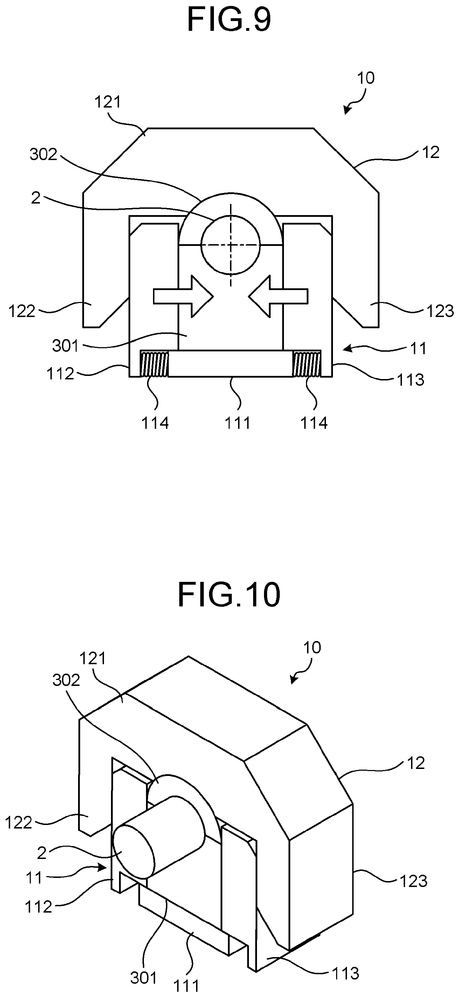

In a state where the first member 301 is attached to the first bonding member 11 and the second member 302 is attached to the second bonding member 12 (see FIGS. 7 and 8), when the body portion 2 is disposed between the first member 301 and the second member 302 and the second bonding member 12 is placed on the first bonding member 11, the first member 301 is sandwiched and held by the first wall portion 112 and the second wall portion 113 while the body portion 2 is in contact with the first member 301 and the second member 302 (see FIGS. 9 and 10). At this time, immediately after the first member 301 and the second member 302 come into contact with each other, the first member 301 is sandwiched by the first wall portion 112 and the second wall portion 113. However, the contact between the first member 301 and the second member 302 and the sandwiching of the first member 301 by the first wall portion 112 and the second wall portion 113 may be performed in the reverse order or at the same time.

The first wall portion 112 and the second wall portion 113 sandwich and hold the first member 301, so that the first member 301 can be positioned. Further, the movement of the first wall portion 112 and the second wall portion 113 is caused by the contact to the second bonding member 12; therefore, the relative positional relationship between the positions of the first wall portion 112 and the second wall portion 113 and the position of the second bonding member 12 can be fixed. This enables crimping the first member 301 and the second member 302 onto the body portion 2 while a relative misalignment between the position of the first member 301 held by the first bonding member 11 and the position of the second member 302 held by the second bonding member 12 can be controlled.

Further, when the bushing 31 is bonded to the body portion 2 and then the second bonding member 12 is removed from the first bonding member 11, the first wall portion 112 and the second wall portion 113 move in directions away from each other by the biasing force of the coil springs 114, which forms a gap between the first wall portion 112 and the first member 301 as well as between the second wall portion 113 and the first member 301. The gaps allow the first member 301 to be easily removed from the first bonding member 11.

The coil springs 114 are included in a switching mechanism that switches, in a space where the first bonding member 11 holds the first member 301, between a first state in which a gap is formed between the first bonding member 11 and a part of the side surface of the first member 301, which is continuous with the crimping surface with the second member 302, and a second state in which the gap is filled to control the position of the first member 301. In the first embodiment, the gap between the first member 301 and the first bonding member 11 is filled due to the movement of the first wall portion 112 and the second wall portion 113.

In the first embodiment, when the constituent members of the bushing 31 are attached to and detached from the bonding members, a gap is provided between the first wall portion 112 and the first member 301 as well as between the second wall portion 113 and the first member 301 to enhance the workability. When the first member 301 and the second member 302 are crimped onto the body portion 2, the first member 301 is sandwiched by the first wall portion 112 and the second wall portion 113 to fix the position, which enables crimping while misalignment of the crimping surfaces of the first member 301 and the second member 302 with respect to the body portion 2 is prevented. According to the first embodiment, it is possible to prevent the reduction in workability while the bushing 31 is reliably crimped onto the body portion 2.

In the first embodiment, a configuration without the coil springs 114 is possible as long as the first wall portion 112 and the second wall portion 113 can move in directions away from each other under their own weights.

In the first embodiment, the example in which an adhesive is applied to the bushing 31 has been described, but the adhesive may be applied to the body portion 2, or the adhesive may be applied to each of the bushing 31 and the body portion 2.

### (Second Embodiment)

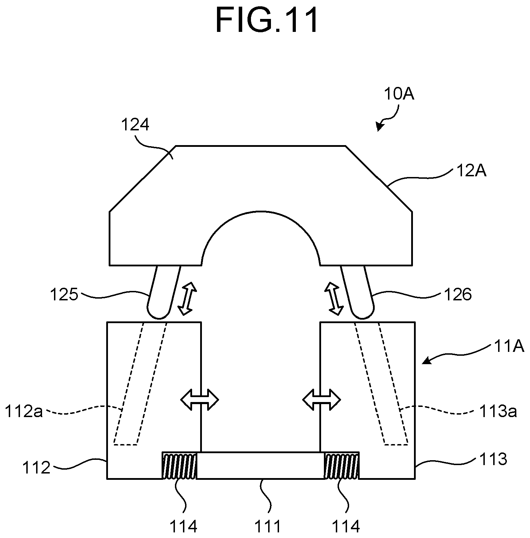

Next, the second embodiment of the present invention will be described with reference to FIG. 11. FIG. 11 is a plan view for explanation of a configuration of a bonding jig for bonding a bushing to a body portion in the second embodiment. The same portions as those of the bonding jig 10 according to the first embodiment are denoted by the same reference numerals.

A bonding jig 10A according to the second embodiment includes a first bonding member 11A and a second bonding member 12A. In the bonding jig 10A, the first member 301 and the second member 302 are cramped onto the body portion 2 by covering the first bonding member 11A with the second bonding member 12A.

The first bonding member 11A includes the bottom surface portion 111 on which the first member 301 is placed, the first wall portion 112 and the second wall portion 113 which are erected, with respect to the bottom surface portion 111, from both ends of the bottom surface portion 111, and the coil springs 114 which bias the first wall portion 112 and the second wall portion 113 in directions away from the bottom surface portion 111. In the first bonding member 11A, holes 112a and 113a are formed in the first wall portion 112 and the second wall portion 113, respectively. The holes 112a and 113a are bored from ends of the first wall portion 112 and the second wall portion 113 opposite to ends thereof connected to the bottom surface portion 111. Each of the holes 112a and 113a has a hole shape extending obliquely toward the outer wall.

The second bonding member 12A includes a body portion 124 that holds the second member 302, and a first pin 125 and a second pin 126 that extend from both ends of the body portion 124. The first pin 125 and the second pin 126 extend opposite to each other depending on the inclination of the holes 112a and 113a. In the second embodiment, the first pin 125, the second pin 126, and the holes 112a and 113a constitute a switching mechanism.

Here, in a state where no load from the second bonding member 12A is placed on the first bonding member 11A, a distance (corresponding to the distance d₃) between the inner wall of the first wall portion 112 and the inner wall of the second wall portion 113 is set to be greater than the width (distance d₄ illustrated in FIG. 7) of the first member 301, and when the second bonding member 12A is placed on the first bonding member 11A, the distance between the inner wall of the first wall portion 112 and the inner wall of the second wall portion 113 is set to be substantially equal to the width d₄.

In the bonding jig 10A, when the second bonding member 12A is placed on the first bonding member 11A, the first pin 125 and the second pin 126 are inserted into the holes 112a and 113a, respectively. The first pin 125 and the second pin 126 slide on the wall surfaces of the holes 112a and 113a to move the first wall portion 112 and the second wall portion 113 toward the bottom surface portion 111. As a result, the distance (corresponding to the distance d₃) between the first wall portion 112 and the second wall portion 113 is shortened. As in the first embodiment, the change in distance enables fixing the positional relationship between the positions of the first wall portion 112 and the second wall portion 113 and the position of the second bonding member 12A, and enables the first member 301 to be easily attached to and detached from the first bonding member 11.

As with the first embodiment, in the second embodiment, when the constituent members of the bushing 31 are attached to and detached from the bonding members, a gap is provided between the first wall portion 112 and the first member 301 as well as between the second wall portion 113 and the first member 301 to enhance the workability. When the first member 301 and the second member 302 are crimped onto the body portion 2, the first member 301 is sandwiched by the first wall portion 112 and the second wall portion 113 to fix the position, which enables crimping while misalignment of the crimping surfaces of the first member 301 and the second member 302 with respect to the body portion 2 is prevented. According to the second embodiment, it is possible to prevent the reduction in workability while the bushing 31 is reliably crimped onto the body portion 2.

### (Third Embodiment)

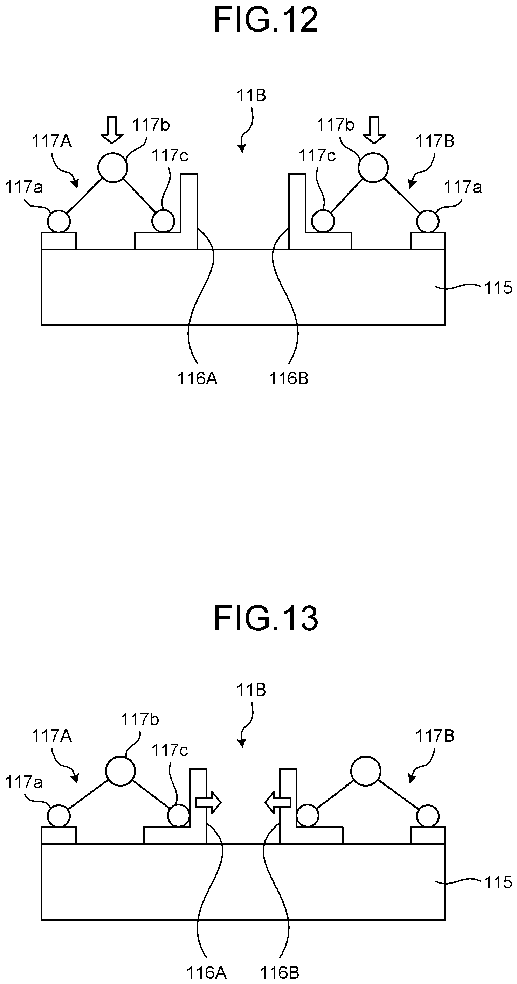

Next, the third embodiment of the present invention will be described with reference to FIGS. 12 and 13. FIGS. 12 and 13 are plan views for explanation of a configuration of a bonding jig for bonding a bushing to a body portion in the third embodiment. In the third embodiment, a configuration of a first bonding member will be described.

A first bonding member 11B according to the third embodiment includes a bottom surface portion 115 on which the first member 301 is placed, a first wall portion 116A and a second wall portion 116B which are placed on the bottom surface portion 115, and a first moving mechanism 117A and a second moving mechanism 117B which move the first wall portion 116A and the second wall portion 116B, respectively. In the first bonding member 11B, the first wall portion 116A and the second wall portion 116B are provided so as to be movable in directions toward or away from each other. The first moving mechanism 117A and the second moving mechanism 117B correspond to a switching mechanism.

The first moving mechanism 117A includes a fulcrum portion 117a fixed to the bottom surface portion 115, an effort point portion 117b to which a load from a second bonding member is applied, and an action portion 117c that moves the first wall portion 116A depending on the load applied to the effort point portion 117b. The fulcrum portion 117a and the effort point portion 117b are connected by a connecting member, and the effort point portion 117b and the action portion 117c are connected by a connecting member.

In the first moving mechanism 117A, when a load in an arrow direction in FIG. 12 is applied to the effort point portion 117b, the effort point portion 117b moves toward the bottom surface portion 115. The movement of the effort point portion 117b moves the action portion 117c in a direction away from the fulcrum portion 117a. As a result, the first wall portion 116A moves toward the second wall portion 116B.

The second moving mechanism 117B also has the same configuration as that of the first moving mechanism 117A. In the second moving mechanism 117B, when a load is applied to the effort point portion 117b, the effort point portion 117b moves toward the bottom surface portion 115. The movement of the effort point portion 117b moves the action portion 117c in a direction away from the fulcrum portion 117a. As a result, the second wall portion 116B moves toward the first wall portion 116A.

At this time, in a state where a load other than gravity is not applied, the first moving mechanism 117A is configured to maintain the shape in a state where the first wall portion 116A and the second wall portion 116B are spaced from each other as illustrated in FIG. 12. The first wall portion 116A and the second wall portion 116B are biased in directions away from each other by a biasing member (not illustrated).

The second bonding member may be any member as long as it can hold the second member 302 and abut on the effort point portion 117b to apply a load. For example, the application is made possible by adjusting the positions of the first wall portion 122 and the second wall portion 123 of the second bonding member 12 and the positions of the first pin 125 and the second pin 126 of the second bonding member 12A.

Here, in a state where no load from the second bonding member is placed on the first bonding member 11B, a distance (corresponding to the distance d₃) between an inner wall of the first wall portion 116A and an inner wall of the second wall portion 116B is set to be greater than the width (distance d₄ illustrated in FIG. 7) of the first member 301, and when the second bonding member is placed on the first bonding member 11B, a distance between the inner wall of the first wall portion 112 and the inner wall of the second wall portion 113 is set to be substantially equal to the width d₄.

In the bonding jig, when the second bonding member is placed on the first bonding member 11B, the distance (corresponding to the distance d₃) between the first wall portion 116A and the second wall portion 116B is shortened. As in the first embodiment, the change in distance enables fixing the positional relationship between the positions of the first wall portion 116A and the second wall portion 116B and the position of the second bonding member, and enables the first member 301 to be easily attached to and detached from the first bonding member 11.

As with the first embodiment, in the third embodiment, when the constituent members of the bushing 31 are attached to and detached from the bonding members, a gap is provided between the first wall portion 116A and the first member 301 as well as between the second wall portion 116B and the first member 301 to enhance the workability. When the first member 301 and the second member 302 are crimped onto the body portion 2, the first member 301 is sandwiched by the first wall portion 116A and the second wall portion 116B to fix the position, which enables crimping while misalignment of the crimping surfaces of the first member 301 and the second member 302 with respect to the body portion 2 is prevented. According to the third embodiment, it is possible to prevent the reduction in workability while the bushing 31 is reliably crimped onto the body portion 2.

### (Fourth Embodiment)

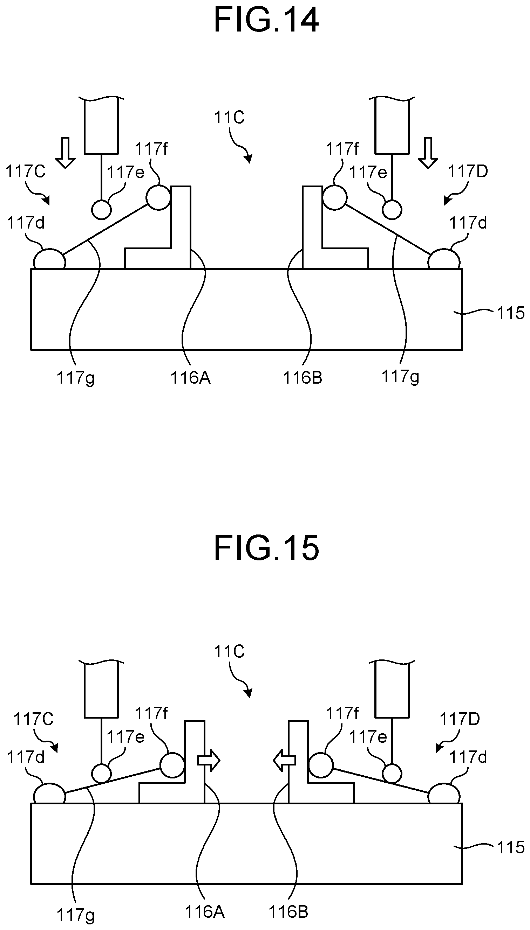

Next, the fourth embodiment of the present invention will be described with reference to FIGS. 14 and 15. FIGS. 14 and 15 are plan views for explanation of a configuration of a bonding jig for bonding a bushing to a body portion in the fourth embodiment.

A first bonding member 11C according to the fourth embodiment includes a bottom surface portion 115 on which the first member 301 is placed, the first wall portion 116A and the second wall portion 116B which are placed on the bottom surface portion 115, and a first moving mechanism 117C and a second moving mechanism 117D which move the first wall portion 116A and the second wall portion 116B, respectively. The first moving mechanism 117C and the second moving mechanism 117D correspond to a switching mechanism.

The first moving mechanism 117C includes a fulcrum portion 117d fixed to the bottom surface portion 115, an effort point portion 117e to which a load from a second bonding member is applied, and an action portion 117f that moves the first wall portion 116A depending on the load applied to the effort point portion 117e. The fulcrum portion 117d and the action portion 117f are connected by a connecting member 117g.

In the first moving mechanism 117C, when a load in an arrow direction in FIG. 14 is applied to the effort point portion 117e, the effort point portion 117e moves toward the bottom surface portion 115. The effort point portion 117e moves to come into contact with the connecting member 117g, and pushes down the connecting member 117g. The connecting member 117g rotates around the fulcrum portion 117d to move the action portion 117f. The action portion 117f slides with respect to the first wall portion **116A.** As a result, the first wall portion 116A moves toward the second wall portion 116B.

The second moving mechanism 117D also has the same configuration as that of the first moving mechanism **117C.** In the second moving mechanism 117D, when a load is applied to the effort point portion 117e, the effort point portion 117e moves toward the bottom surface portion 115. The movement of the effort point portion 117e slides the action portion 117f with respect to the second wall portion **116B.** As a result, the second wall portion 116B moves toward the first wall portion 116A.

The second bonding member may be any member as long as it can hold the second member 302 and abut on the effort point portion 117e to apply a load. For example, the application is made possible by adjusting the positions of the first wall portion 122 and the second wall portion 123 of the second bonding member 12 and the positions of the first pin 125 and the second pin 126 of the second bonding member 12A. Alternatively, the effort point portion 117e may be provided at an end of the second bonding member.

Here, in a state where no load from the second bonding member is placed on the first bonding member 11C, a distance (corresponding to the distance d₃) between the inner wall of the first wall portion 116A and the inner wall of the second wall portion 116B is set to be greater than the width (distance d₄ illustrated in FIG. 7) of the first member 301, and when the second bonding member is placed on the first bonding member 11C, a distance between the inner wall of the first wall portion 112 and the inner wall of the second wall portion 113 is set to be substantially equal to the width d₄.

In the bonding jig, when the second bonding member is placed on the first bonding member 11C, the distance (corresponding to the distance d₃) between the first wall portion 116A and the second wall portion 116B is shortened. As in the first embodiment, the change in distance enables fixing the positional relationship between the positions of the first wall portion 116A and the second wall portion 116B and the position of the second bonding member, and enables the first member 301 to be easily attached to and detached from the first bonding member 11.

As with the first embodiment, in the fourth embodiment, when the constituent members of the bushing 31 are attached to and detached from the bonding members, a gap is provided between the first wall portion 116A and the first member 301 as well as between the second wall portion 116B and the first member 301 to enhance the workability. When the first member 301 and the second member 302 are crimped onto the body portion 2, the first member 301 is sandwiched by the first wall portion 116A and the second wall portion 116B to fix the position, which enables crimping while misalignment of the crimping surfaces of the first member 301 and the second member 302 with respect to the body portion 2 is prevented. According to the fourth embodiment, it is possible to prevent the reduction in workability while the bushing 31 is reliably crimped onto the body portion 2.

### (Fifth Embodiment)

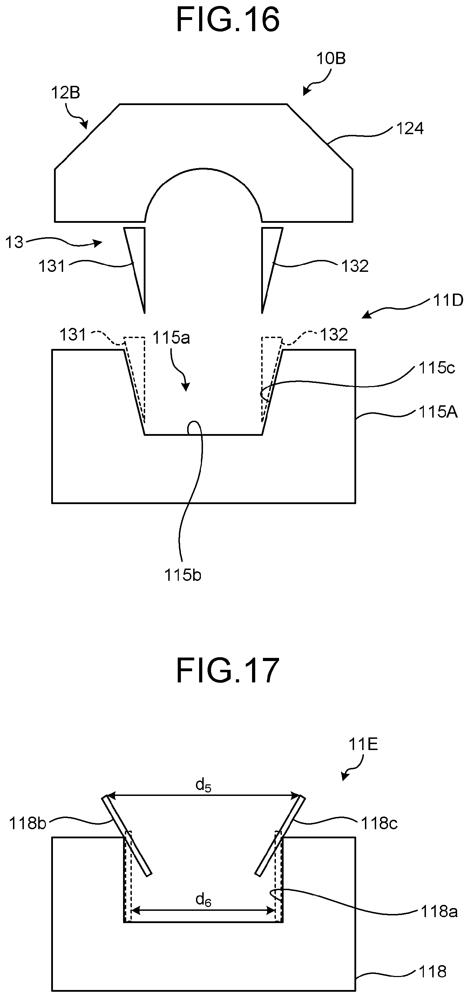

Next, the fifth embodiment of the present invention will be described with reference to FIG. 16. FIG. 16 is a plan view for explanation of a configuration of a bonding jig for bonding a bushing to a body portion in the fifth embodiment. The same portions as those of the bonding jig 10 according to the first embodiment are denoted by the same reference numerals.

A bonding jig 10B according to the fifth embodiment includes a first bonding member 11D, a second bonding member 12B, and a wedge 13. In the bonding jig 10B, when the second bonding member 12B is placed on the first bonding member 11D, the wedge 13 enters the first bonding member 11D to crimp the first member 301 and the second member 302 onto the body portion 2.

The first bonding member 11D has a body portion 115A in which a housing portion 115a for accommodating the first member 301 is formed. The housing portion 115a includes a bottom surface 115b on which the first member 301 is placed and a side surface 115c extending obliquely in a direction of the expansion of the internal space with respect to the bottom surface 115b.

The second bonding member 12B has the body portion 124 that holds the second member 302.

The wedge 13 has a first claw portion 131 and a second claw portion 132 extending in a conical shape. The first claw portion 131 and the second claw portion 132 are designed to be equal to the width (distance d₄ illustrated in FIG. 7) of the first member 301 when entering the first bonding member 11D. The wedge 13 (the first claw portion 131 and the second claw portion 132) constitutes a switching mechanism.

Here, in a state where no load from the second bonding member 12B is placed on the first bonding member 11D, the shortest distance between the facing side surfaces 115c is the distance between the ends continuous to the bottom surface 115b, and is equal to the first member 301 (width d₄). The longest distance between the facing side surfaces 115c is a distance between the ends (openings) on the opposite side to the bottom surface 115b side, and is greater than the width of the first member 301 (distance d₄ illustrated in FIG. 7) (corresponding to distance d₃).

In the bonding jig 10B, when the second bonding member 12B is placed on the first bonding member 11D, the first claw portion 131 and the second claw portion 132 enter the housing portion 115a. The first claw portion 131 and the second claw portion 132 are inserted into the housing portion 115a, so that the distance (corresponding to the distance d₃) between the wall surfaces in the housing portion 115a is shortened. The change in distance enables fixing the positional relationship between the position of the first member 301 in the first bonding member 11D and the position of the second member 302 in the second bonding member 12, and enables the first member 301 to be easily attached to and detached from the first bonding member 11.

As with the first embodiment, in the fifth embodiment, when the constituent members of the bushing 31 are attached to and detached from the bonding members, a gap is provided between the first member 301 and the housing portion 115a to enhance the workability. When the first member 301 and the second member 302 are crimped onto the body portion 2, the first member 301 is sandwiched by the first claw portion 131 and the second claw portion 132 to fix the position, which enables crimping while misalignment of the crimping surfaces of the first member 301 and the second member 302 with respect to the body portion 2 is prevented. According to the fifth embodiment, it is possible to prevent the reduction in workability while the bushing 31 is reliably crimped onto the body portion 2.

### (Sixth Embodiment)

Next, the sixth embodiment of the present invention will be described with reference to FIG. 17. FIG. 17 is a plan view for explanation of a configuration of a bonding jig for bonding a bushing to a body portion in the sixth embodiment. In the sixth embodiment, a configuration of a first bonding member will be described.

A first bonding member 11E according to the sixth embodiment has a body portion 118 in which a housing portion 118a for accommodating the first member 301 is formed. The body portion 118 includes a first plate 118b and a second plate 118c that are provided at an open end of the housing portion 118a and are rotatable about a corner of the housing portion 118a as a fulcrum. The first plate 118b and the second plate 118c may be connected so as not to be detached from the body portion 118, or may be separated from the body portion 118. The first plate 118b and the second plate 118c constitute a switching mechanism.

The first plate 118b and the second plate 118c are inclined so that the outer sides thereof extend beyond the housing portion 118a in a state where a load other than gravity is not applied, which allows the first member 301 to be easily housed. On the other hand, after the bonding process, the first plate 118b and the second plate 118c are pulled out, which creates a gap corresponding to the size of the plate thickness between the housing portion 118a and the first member 301, so that the first member 301 is easily pulled out from the housing portion 118a.

The second bonding member may be any member as long as the second bonding member holds the second member 302 and does not interfere with the first plate 118b and the second plate 118c when covering the first bonding member 11E. For example, the application is made possible by adjusting the positions of the first wall portion 122 and the second wall portion 123 of the second bonding member 12.

Here, in a state where no load from the second bonding member is placed on the first bonding member 11E, the maximum distance d₅ between the first plate 118b and the second plate 118c is greater than the width of the first member 301 (distance d₄ illustrated in FIG. 7). Setting is so made that a distance d₆ between the first plate 118b and the second plate 118c is substantially equal to the width d₄ when the first plate 118b and the second plate 118c are housed in the housing portion 118a.

In the bonding jig, when the first plate 118b and the second plate 118c are accommodated in the housing portion 118a from an inclined state outside the housing portion 118a, the distance between the first plate 118b and the second plate 118c is shortened. As in the first embodiment, the change in distance enables fixing the positional relationship between the position of the first member 301 by the first plate 118b and the second plate 118c and the position of the second member 302 of the second bonding member, and enables the first member 301 to be easily attached to and detached from the first bonding member 11.

As with the first embodiment, in the sixth embodiment, when the constituent members of the bushing 31 are attached to and detached from the bonding members, a gap is provided between the housing portion 118a and the first member 301 to enhance the workability. When the first member 301 and the second member 302 are crimped onto the body portion 2, the first member 301 is sandwiched by the first plate 118b and the second plate 118c to fix the position, which enables crimping while misalignment of the crimping surfaces of the first member 301 and the second member 302 with respect to the body portion 2 is prevented. According to the sixth embodiment, it is possible to prevent the reduction in workability while the bushing 31 is reliably crimped onto the body portion 2.

### (Seventh Embodiment)

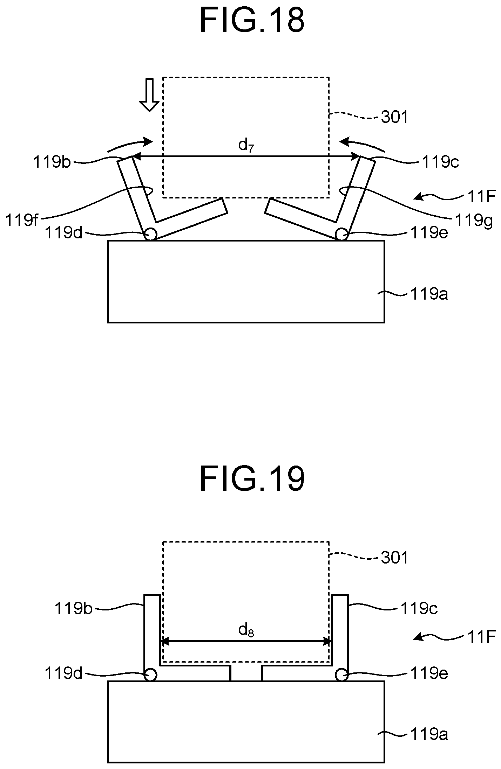

Next, the seventh embodiment of the present invention will be described with reference to FIGS. 18 and 19. FIGS. 18 and 19 are plan views for explanation of a configuration of a bonding jig for bonding a bushing to a body portion in the seventh embodiment. In the seventh embodiment, a configuration of a first bonding member will be described.

A first bonding member 11F according to the seventh embodiment includes a body portion 119a, and a first holding portion 119b and a second holding portion 119c formed by bending a plate-like member. The first holding portion 119b rotates around a shaft 119d. The second holding portion 119c rotates around a shaft 119e. The shafts 119d and 119e are fixed to the body portion 119a and attached to bent portions of the respective holding portions. The first holding portion 119b and the second holding portion 119c accommodate the first member 301 between portions (hereinafter, referred to as wall portions 119f and 119g) rising and extending from the body portion 119a. The first holding portion 119b and the second holding portion 119c constitute a switching mechanism.

The first holding portion 119b and the second holding portion 119c are inclined so that the wall portions 119f and 119g extend outward in a state where a load other than gravity is not applied, which allows the first member 301 to be easily housed and taken out (see FIG. 18). On the other hand, when the first member 301 is placed, the first holding portion 119b and the second holding portion 119c rotate, and the wall portions 119f and 119g sandwich the first member 301 therebetween (see FIG. 19).

The second bonding member may be any member as long as the second bonding member holds the second member 302 and does not interfere with the first holding portion 119b and the second holding portion 119c when covering the first bonding member 11F. For example, the application is made possible by adjusting the positions of the first wall portion 122 and the second wall portion 123 of the second bonding member 12.

Here, in a state where no load from the second bonding member is placed on the first bonding member 11F, the maximum distance d₇ between the wall portions 119f and 119g is greater than the width of the first member 301 (distance d₄ illustrated in FIG. 7). Setting is so made that a distance d₈ between the wall portions 119f and 119g is substantially equal to the width d₄ when the first member 301 is placed and the first holding portion 119b and the second holding portion 119c rotate.

In the bonding jig, when the first member 301 is placed by the first holding portion 119b and the second holding portion 119c from a state in which the wall portions 119f and 119g are inclined in directions away from each other, the distance between the wall portions 119f and 119g is shortened. As in the first embodiment, the change in distance enables fixing the positional relationship between the position of the first member 301 by the first holding portion 119b and the second holding portion 119c and the position of the second member 302 of the second bonding member, and enables the first member 301 to be easily attached to and detached from the first bonding member 11.

As with the first embodiment, in the seventh embodiment, when the constituent members of the bushing 31 are attached to and detached from the bonding members, a gap is provided between the first holding portion 119b (wall portion 119f) and the first member 301 as well as between the second holding portion 119c (wall portion 119g) and the first member 301 to enhance the workability. When the first member 301 and the second member 302 are crimped onto the body portion 2, the first member 301 is sandwiched by the wall portions 119f and 119g to fix the position, which enables crimping while misalignment of the crimping surfaces of the first member 301 and the second member 302 with respect to the body portion 2 is prevented. According to the seventh embodiment, it is possible to prevent the reduction in workability while the bushing 31 is reliably crimped onto the body portion 2.

### (Eighth Embodiment)

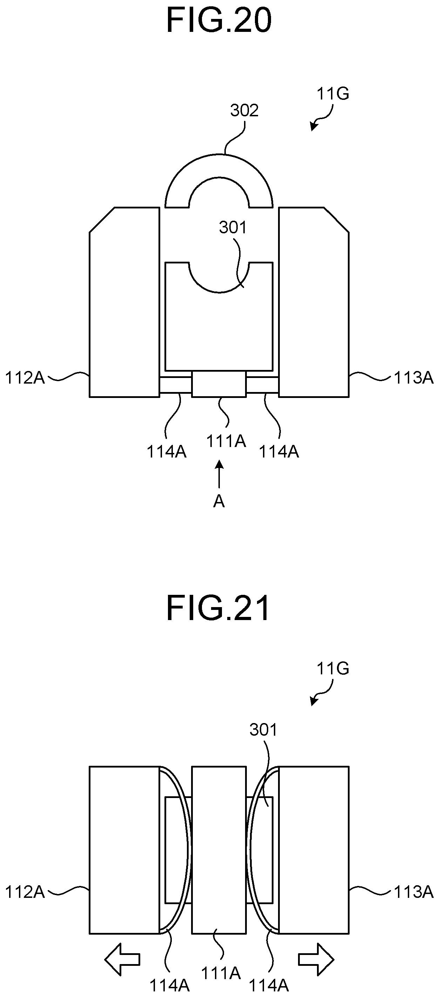

Next, the eighth embodiment of the present invention will be described with reference to FIGS. 20 and 21. FIG. 20 is a plan view for explanation of a configuration of a bonding jig for bonding a bushing to a body portion in the eighth embodiment. FIG. 21 is a plan view illustrating a configuration of the bonding jig viewed from a direction of an arrow A illustrated in FIG. 20. In the eighth embodiment, a configuration of a first bonding member will be described.

A first bonding member 11G according to the eighth embodiment includes a bottom surface portion 111A on which the first member 301 is placed, a first wall portion 112A and a second wall portion 113A which are erected, with respect to the bottom surface portion 111A, on the side of both ends of the bottom surface portion 111A, and leaf springs 114A which bias the wall portions in directions away from the bottom surface portion 111A.

The leaf springs 114A are included in a switching mechanism that switches, in a space where the first bonding member 11G holds the first member 301, between a first state in which a gap is formed between the first bonding member 11G and a part of the side surface of the first member 301, which is continuous with the crimping surface with the second member 302, and a second state in which the gap is filled to control the position of the first member 301. In the eighth embodiment, the gap between the first member 301 and the first bonding member 11G is changed due to the movement of the first wall portion 112A and the second wall portion 113A.

The leaf spring 114A has a central portion connected to the bottom surface portion 111A and both ends connected to the first wall portion 112A (or the second wall portion 113A). The leaf springs 114A bias the wall portions connected thereto in directions away from the bottom surface portion 111A. The leaf springs 114A are fixed to the bottom surface portion 111A and the wall portion by screwing, welding, or the like.

The second bonding member may be any member as long as the second bonding member holds the second member 302 and comes into contact with the first wall portion 112A and the second wall portion 113A to move the first wall portion 112A and the second wall portion 113A toward the bottom surface portion 111A when covering the first bonding member 11G. For example, the application is made possible by adjusting the positions of the first wall portion 122 and the second wall portion 123 of the second bonding member 12.

Here, in a state where no load from the second bonding member is placed on the first bonding member 11G, a distance between the first wall portion 112A and the second wall portion 113A is greater than the width of the first member 301 (width d₄ illustrated in FIG. 7). Setting is so made that the distance between the first wall portion 112A and the second wall portion 113A is substantially equal to the width d₄ when the second bonding member is attached to the first bonding member.

As with the first embodiment, in the eighth embodiment, when the constituent members of the bushing 31 are attached to and detached from the bonding members, a gap is provided between the first wall portion 112A and the first member 301 as well as between the second wall portion 113A and the first member 301 to enhance the workability. When the first member 301 and the second member 302 are crimped onto the body portion 2, the first member 301 is sandwiched by the first wall portion 112A and the second wall portion 113A to fix the position, which enables crimping while misalignment of the crimping surfaces of the first member 301 and the second member 302 with respect to the body portion 2 is prevented. According to the eighth embodiment, it is possible to prevent the reduction in workability while the bushing 31 is reliably crimped onto the body portion 2.

### (Ninth Embodiment)

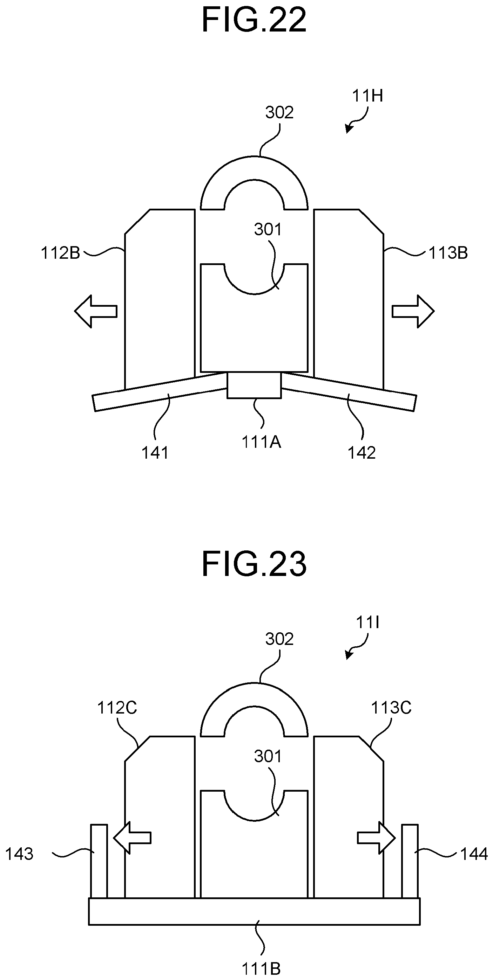

Next, the ninth embodiment of the present invention will be described with reference to FIG. 22. FIG. 22 is a plan view for explanation of a configuration of a bonding jig for bonding a bushing to a body portion in the ninth embodiment. In the ninth embodiment, a configuration of a first bonding member will be described.

A first bonding member 11H according to the ninth embodiment includes the bottom surface portion 111A on which the first member 301 is placed, a first wall portion 112B and a second wall portion 113B which are erected, with respect to the bottom surface portion 111A, on the side of both ends of the bottom surface portion 111A, and a first inclined portion 141 and a second inclined portion 142 that movably hold the wall portions, respectively.

The first inclined portion 141 and the second inclined portion 142 extend obliquely downward as being away from the bottom surface portion 111A. Therefore, the first wall portion 112B and the second wall portion 113B move in a direction away from the bottom surface portion 111A under their own weights in a state where a load other than gravity is not applied. The first inclined portion 141 and the second inclined portion 142 are included in a switching mechanism that switches, in a space where the first bonding member 11H holds the first member 301, between a first state in which a gap is formed between the first bonding member 11H and a part of the side surface of the first member 301, which is continuous with the crimping surface with the second member 302, and a second state in which the gap is filled to control the position of the first member 301.

The second bonding member may be any member as long as the second bonding member holds the second member 302 and comes into contact with the first wall portion 112B and the second wall portion 113B to move the first wall portion 112B and the second wall portion 113B toward the bottom surface portion 111A when covering the first bonding member 11H. For example, the application is made possible by adjusting the positions of the first wall portion 122 and the second wall portion 123 of the second bonding member 12.

At this time, in response to the second bonding member attached, the first wall portion 112B and the second wall portion 113B rise along the first inclined portion 141 and the second inclined portion 142, respectively, and approach the bottom surface portion 111A. When the second bonding member is removed, the first wall portion 112B and the second wall portion 113B fall along the first inclined portion 141 and the second inclined portion 142, respectively, under their own weights so as to be away from the bottom surface portion 111A.

Here, in a state where no load from the second bonding member is placed on the first bonding member 11H, a distance between the first wall portion 112B and the second wall portion 113B is greater than the width of the first member 301 (width d₄ illustrated in FIG. 7). Setting is so made that the distance between the first wall portion 112B and the second wall portion 113B is substantially equal to the width d₄ when the second bonding member is attached to the first bonding member.

As with the first embodiment, in the ninth embodiment, when the constituent members of the bushing 31 are attached to and detached from the bonding members, a gap is provided between the first wall portion 112B and the first member 301 as well as between the second wall portion 113B and the first member 301 to enhance the workability. When the first member 301 and the second member 302 are crimped onto the body portion 2, the first member 301 is sandwiched by the first wall portion 112B and the second wall portion 113B to fix the position, which enables crimping while misalignment of the crimping surfaces of the first member 301 and the second member 302 with respect to the body portion 2 is prevented. According to the ninth embodiment, it is possible to prevent the reduction in workability while the bushing 31 is reliably crimped onto the body portion 2.

### (Tenth Embodiment)

Next, the tenth embodiment of the present invention will be described with reference to FIG. 23. FIG. 23 is a plan view for explanation of a configuration of a bonding jig for bonding a bushing to a body portion in the tenth embodiment. In the tenth embodiment, a configuration of a first bonding member will be described.

A first bonding member 11I according to the tenth embodiment includes a bottom surface portion 111B on which the first member 301 is placed, a first wall portion 112C and a second wall portion 113C that are erected movably on the bottom surface portion 111B, and a first magnetic portion 143 and a second magnetic portion 144 that generate force to move the wall portions.

The first wall portion 112C and the second wall portion 113C are made of a magnetic material.

The first magnetic portion 143 and the second magnetic portion 144 are configured using, for example, an electromagnet, and the energization thereto is controlled by a control device (not illustrated). Therefore, the first wall portion 112C and the second wall portion 113C move in a direction away from the bottom surface portion 111A depending on a state in which the first magnetic portion 143 and the second magnetic portion 144 are energized. For example, when the first magnetic portion 143 and the second magnetic portion 144 are energized, the first wall portion 112C and the second wall portion 113C move in directions away from each other due to the magnetic force generated by the first magnetic portion 143 and the second magnetic portion 144. The first magnetic portion 143 and the second magnetic portion 144 are included in a switching mechanism that switches, in a space where the first bonding member 11I holds the first member 301, between a first state in which a gap is formed between the first bonding member 11I and a part of the side surface of the first member 301, which is continuous with the crimping surface with the second member 302, and a second state in which the gap is filled to control the position of the first member 301.

The second bonding member may be any member as long as the second bonding member holds the second member 302 and comes into contact with the first wall portion 112C and the second wall portion 113C to move the first wall portion 112C and the second wall portion 113C toward the bottom surface portion 111B when covering the first bonding member 11I. For example, the application is made possible by adjusting the positions of the first wall portion 122 and the second wall portion 123 of the second bonding member 12.

Note that, as long as the positions of the first wall portion 112C and the second wall portion 113C can be controlled by attaching the second bonding member, the first magnetic portion 143 and the second magnetic portion 144 may be constantly energized, or may be energized at necessary timing. In addition, as long as the movement of the first wall portion 112C and the second wall portion 113C can be controlled by magnetic force, the second bonding member without the first wall portion 122 and the second wall portion 123 is possible.

Here, in a state where no load from the second bonding member is placed on the first bonding member 11I, a distance between the first wall portion 112C and the second wall portion 113C is greater than the width of the first member 301 (width d₄ illustrated in FIG. 7). Setting is so made that the distance between the first wall portion 112C and the second wall portion 113C is substantially equal to the width d₄ when the second bonding member is attached to the first bonding member.

As with the first embodiment, in the tenth embodiment, when the constituent members of the bushing 31 are attached to and detached from the bonding members, a gap is provided between the first wall portion 112C and the first member 301 as well as between the second wall portion 113C and the first member 301 to enhance the workability. When the first member 301 and the second member 302 are crimped onto the body portion 2, the first member 301 is sandwiched by the first wall portion 112C and the second wall portion 113C to fix the position, which enables crimping while misalignment of the crimping surfaces of the first member 301 and the second member 302 with respect to the body portion 2 is prevented. According to the tenth embodiment, it is possible to prevent the reduction in workability while the bushing 31 is reliably crimped onto the body portion 2.

### (Eleventh Embodiment)

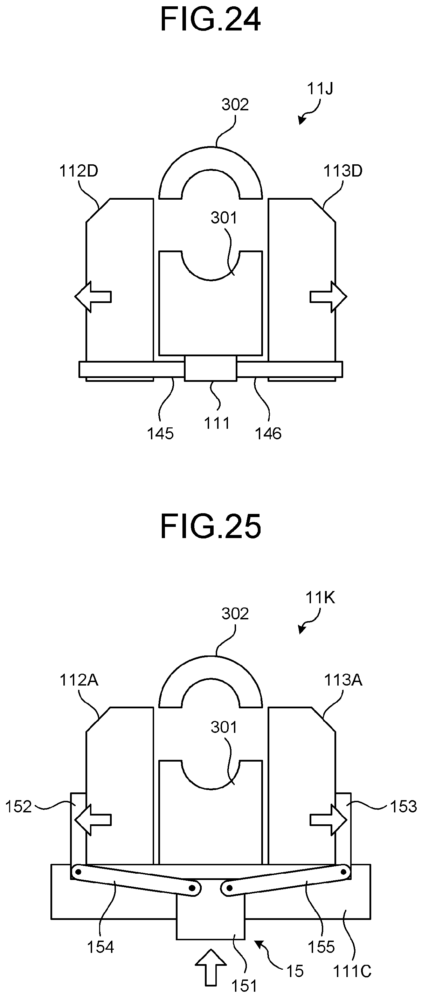

Next, the eleventh embodiment of the present invention will be described with reference to FIG. 24. FIG. 24 is a plan view for explanation of a configuration of a bonding jig for bonding a bushing to a body portion in the eleventh embodiment. In the eleventh embodiment, a configuration of a first bonding member will be described.

A first bonding member 11J according to the eleventh embodiment includes the bottom surface portion 111 on which the first member 301 is placed, a first wall portion 112D and a second wall portion 113D which are erected, with respect to the bottom surface portion 111, on the side of both ends of the bottom surface portion 111, and a first screw portion 145 and a second screw portion 146 that movably hold the wall portions, respectively.

The first screw portion 145 has a rod shape extending from the bottom surface portion 111 and penetrates the first wall portion 112D. The first screw portion 145 is formed with a screw thread and is screwed to the first wall portion 112D. Rotation of the first screw portion 145 around the longitudinal axis moves the first wall portion 112D in the longitudinal axis direction. The moving direction of the first wall portion 112D is determined depending on the rotating direction of the first screw portion 145. The first screw portion 145 may be manually rotated by a user, or may be electrically rotated by a motor or the like. The second screw portion 146 extends from the bottom surface portion 111 in a direction opposite to the first screw portion 145 and penetrates the second wall portion 113D. The second screw portion 146 is formed with a screw thread similarly to the first screw portion 145, and rotates to move the second wall portion 113D.

The first screw portion 145 and the second screw portion 146 are included in a switching mechanism that switches, in a space where the first bonding member 11J holds the first member 301, between a first state in which a gap is formed between the first bonding member 11J and a part of the side surface of the first member 301, which is continuous with the crimping surface with the second member 302, and a second state in which the gap is filled to control the position of the first member 301.

The second bonding member may be any member as long as the second bonding member holds the second member 302 and can bring the second member 302 into contact with the first member 301 held by the first bonding member 11J when covering the first bonding member 11J.

In the eleventh embodiment, when the second bonding member is attached, the first screw portion 145 and the second screw portion 146 are rotated to move the first wall portion 112D and the second wall portion 113D toward the bottom surface portion 111. After the bonding process, the first screw portion 145 and the second screw portion 146 are rotated to move the first wall portion 112D and the second wall portion 113D in a direction away from the bottom surface portion 111.

When the first member 301 is attached or detached, a distance between the first wall portion 112D and the second wall portion 113D is greater than the width of the first member 301 (width d₄ illustrated in FIG. 7). Setting is so made that the distance between the first wall portion 112D and the second wall portion 113D is substantially equal to the width d₄ when the first member 301 and the second member 302 are attached to each other.

As with the first embodiment, in the eleventh embodiment, when the constituent members of the bushing 31 are attached to and detached from the bonding members, a gap is provided between the first wall portion 112D and the first member 301 as well as between the second wall portion 113D and the first member 301 to enhance the workability. When the first member 301 and the second member 302 are crimped onto the body portion 2, the first member 301 is sandwiched by the first wall portion 112D and the second wall portion 113D to fix the position, which enables crimping while misalignment of the crimping surfaces of the first member 301 and the second member 302 with respect to the body portion 2 is prevented. According to the eleventh embodiment, it is possible to prevent the reduction in workability while the bushing 31 is reliably crimped onto the body portion 2.

### (Twelfth Embodiment)

Next, the twelfth embodiment of the present invention will be described with reference to FIG. 25. FIG. 25 is a plan view for explanation of a configuration of a bonding jig for bonding a bushing to a body portion in the twelfth embodiment. In the twelfth embodiment, a configuration of a first bonding member will be described.

A first bonding member 11K according to the twelfth embodiment includes a bottom surface portion 111C on which the first member 301 is placed, the first wall portion 112A and the second wall portion 113A which are erected, with respect to the bottom surface portion 111C, on the side of both ends of the bottom surface portion 111C, and a link mechanism 15 that movably holds the wall portions.

The link mechanism 15 includes an operation portion 151 provided on the bottom surface portion 111C, a first support portion 152 attached to the first wall portion 112A, a second support portion 153 attached to the second wall portion 113A, a first link 154 connecting the operation portion 151 and the first support portion 152, and a second link 155 connecting the operation portion 151 and the second support portion 153. In the link mechanism 15, when the operation portion 151 is pushed against the bottom surface portion 111C, the first support portion 152 and the second support portion 153 move in directions away from each other via the first link 154 and the second link 155. This also moves the wall portions supported by the support portions.

The link mechanism 15 constitutes a switching mechanism that switches, in a space where the first bonding member 11K holds the first member 301, between a first state in which a gap is formed between the first bonding member 11K and a part of the side surface of the first member 301, which is continuous with the crimping surface with the second member 302, and a second state in which the gap is filled to control the position of the first member 301.

The second bonding member may be any member as long as the second bonding member holds the second member 302 and can bring the second member 302 into contact with the first member 301 held by the first bonding member 11K when covering the first bonding member 11K.

In the twelfth embodiment, when the second bonding member is attached, the operation portion 151 is pushed to move the first wall portion 112A and the second wall portion 113A in directions toward each other. After the bonding process, the pressing of the operation portion 151 is released to move the first wall portion 112A and the second wall portion 113A in directions away from each other.

In a state where the operation portion 151 is pushed in, a distance between the first wall portion 112A and the second wall portion 113A is greater than the width of the first member 301 (width d₄ illustrated in FIG. 7). Setting is so made that the distance between the first wall portion 112A and the second wall portion 113A is substantially equal to the width d₄ in a state where a load other than gravity is not applied to the operation portion 151.

As with the first embodiment, in the twelfth embodiment, when the constituent members of the bushing 31 are attached to and detached from the bonding members, a gap is provided between the first wall portion 112A and the first member 301 as well as between the second wall portion 113A and the first member 301 to enhance the workability. When the first member 301 and the second member 302 are crimped onto the body portion 2, the first member 301 is sandwiched by the first wall portion 112A and the second wall portion 113A to fix the position, which enables crimping while misalignment of the crimping surfaces of the first member 301 and the second member 302 with respect to the body portion 2 is prevented. According to the twelfth embodiment, it is possible to prevent the reduction in workability while the bushing 31 is reliably crimped onto the body portion 2.

### (Thirteenth Embodiment)

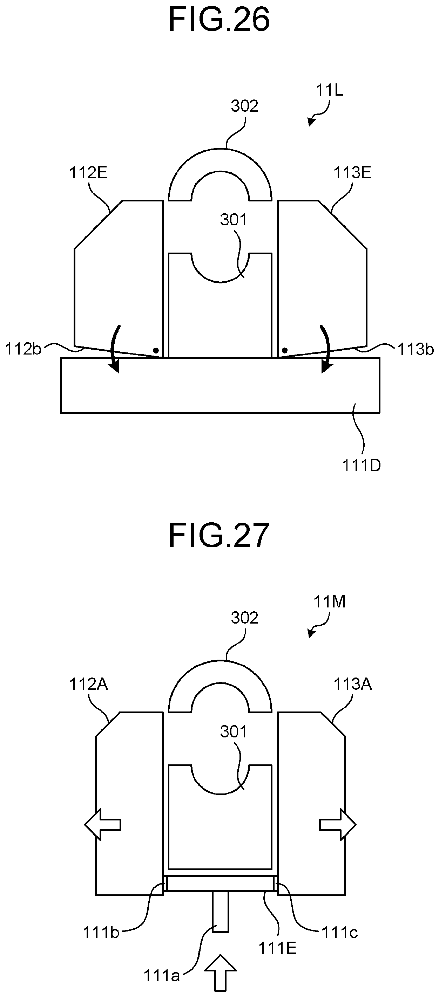

Next, the thirteenth embodiment of the present invention will be described with reference to FIG. 26. FIG. 26 is a plan view for explanation of a configuration of a bonding jig for bonding a bushing to a body portion in the thirteenth embodiment. In the thirteenth embodiment, a configuration of a first bonding member will be described.

A first bonding member 11L according to the thirteenth embodiment includes a bottom surface portion 111D on which the first member 301 is placed, and a first wall portion 112E and a second wall portion 113E which are erected, with respect to the bottom surface portion 111D, on the side of both ends of the bottom surface portion 111D.

The first wall portion 112E and the second wall portion 113E are formed with switching surfaces 112b and 113b, respectively. Each of the switching surfaces 112b and 113b constitutes a wall surface facing the bottom surface portion 111D and forms an acute angle with the wall surface facing the first member 301. Therefore, the first wall portion 112E and the second wall portion 113E are inclined in such a manner that the switching surfaces and the bottom surface portion 111D make a surface contact with each other under their own weights in a natural state where a load other than gravity is not applied. As a result, in the natural state, the wall surfaces of the first wall portion 112E and the second wall portion 113E facing the first member 301 are inclined, and a gap is formed between the first member 301 and each of the first wall portion 112E and the second wall portion 113E. The first wall portion 112E and the second wall portion 113E, in particular, the switching surfaces 112b and 113b, are included in a switching mechanism that switches, in a space where the first bonding member 11L holds the first member 301, between a first state in which a gap is formed between the first bonding member 11L and a part of the side surface of the first member 301, which is continuous with the crimping surface with the second member 302, and a second state in which the gap is filled to control the position of the first member 301.

The second bonding member may be any member as long as the second bonding member holds the second member 302 and comes into contact with the first wall portion 112E and the second wall portion 113E to move the first wall portion 112E and the second wall portion 113E toward the bottom surface portion 111D when covering the first bonding member 11L. For example, the application is made possible by adjusting the positions of the first wall portion 122 and the second wall portion 123 of the second bonding member 12.

At this time, attaching the second bonding member rotates the first wall portion 112E and the second wall portion 113E, so that the switching surfaces 112b and 113b are spaced from the bottom surface portion 111D and the first wall portion 112E and the second wall portion 113E approach each other. When the second bonding member is detached, the first wall portion 112E and the second wall portion 113E rotate, the switching surfaces 112b and 113b come into contact with the bottom surface portion 111D, and the first wall portion 112E and the second wall portion 113E move away from each other.

Here, in a state where no load from the second bonding member is placed on the first bonding member 11L, the maximum distance between the first wall portion 112E and the second wall portion 113E is greater than the width of the first member 301 (width d₄ illustrated in FIG. 7). Setting is so made that the distance between the first wall portion 112E and the second wall portion 113E is substantially equal to the width d₄ when the second bonding member is attached to the first bonding member 11L.

As with the first embodiment, in the thirteenth embodiment, when the constituent members of the bushing 31 are attached to and detached from the bonding members, a gap is provided between the first wall portion 112E and the first member 301 as well as between the second wall portion 113E and the first member 301 to enhance the workability. When the first member 301 and the second member 302 are crimped onto the body portion 2, the first member 301 is sandwiched by the first wall portion 112E and the second wall portion 113E to fix the position, which enables crimping while misalignment of the crimping surfaces of the first member 301 and the second member 302 with respect to the body portion 2 is prevented. According to the thirteenth embodiment, it is possible to prevent the reduction in workability while the bushing 31 is reliably crimped onto the body portion 2.

### (Fourteenth Embodiment)

Next, the fourteenth embodiment of the present invention will be described with reference to FIG. 27. FIG. 27 is a plan view for explanation of a configuration of a bonding jig for bonding a bushing to a body portion in the fourteenth embodiment. In the fourteenth embodiment, a configuration of a first bonding member will be described.

A first bonding member 11M according to the fourteenth embodiment includes a bottom surface portion 111E on which the first member 301 is placed, and the first wall portion 112A and the second wall portion 113A which are erected, with respect to the bottom surface portion 111E, on the side of both ends of the bottom surface portion 111E.

The bottom surface portion 111E has a tubular shape in which one end is bifurcated, an air flow path is formed inside, and the first member 301 is placed. The bottom surface portion 111E includes a first opening portion 111a, a second opening portion 111b that communicates with the first opening portion 111a, is provided at one bifurcated end, and faces the first wall portion 112A, and a third opening portion 111c that is provided at the other bifurcated end, and faces the second wall portion 113A. Air introduced into the first opening portion 111a or sucked from the first opening portion 111a adjusts air sucked or blown out from the second opening portion 111b and the third opening portion 111c. When air is blown out from the second opening portion 111b and the third opening portion 111c, the first wall portion 112A and the second wall portion 113A move in directions away from each other. When air is sucked from the second opening portion 111b and the third opening portion 111c, the first wall portion 112A and the second wall portion 113A move in directions toward each other.

The bottom surface portion 111E is included in a switching mechanism that switches, in a space where the first bonding member 11M holds the first member 301, between a first state in which a gap is formed between the first bonding member 11M and a part of the side surface of the first member 301, which is continuous with the crimping surface with the second member 302, and a second state in which the gap is filled to control the position of the first member 301.

The second bonding member may be any member as long as the second bonding member holds the second member 302 and can bring the second member 302 into contact with the first member 301 held by the first bonding member 11M when covering the first bonding member 11M.

In the fourteenth embodiment, when the second bonding member is attached, air is sucked from the first opening portion 111a to bring the first wall portion 112A and the second wall portion 113A close to each other. After the bonding process, air is introduced into the first opening portion 111a to blow air to the first wall portion 112A and the second wall portion 113A to move the first wall portion 112A and the second wall portion 113A in directions away from each other.

When the first member 301 is attached or detached, a distance between the first wall portion 112A and the second wall portion 113A is greater than the width of the first member 301 (width d₄ illustrated in FIG. 7). Setting is so made that the distance between the first wall portion 112A and the second wall portion 113A is substantially equal to the width d₄ when the first member 301 and the second member 302 are bonded together.

As with the first embodiment, in the fourteenth embodiment, when the constituent members of the bushing 31 are attached to and detached from the bonding members, a gap is provided between the first wall portion 112A and the first member 301 as well as between the second wall portion 113A and the first member 301 to enhance the workability. When the first member 301 and the second member 302 are crimped onto the body portion 2, the first member 301 is sandwiched by the first wall portion 112A and the second wall portion 113A to fix the position, which enables crimping while misalignment of the crimping surfaces of the first member 301 and the second member 302 with respect to the body portion 2 is prevented. According to the fourteenth embodiment, it is possible to prevent the reduction in workability while the bushing 31 is reliably crimped onto the body portion 2.

### (Fifteenth Embodiment)

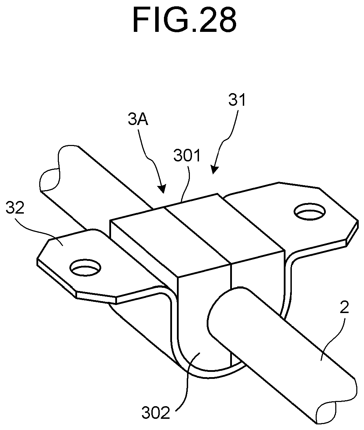

Next, the fifteenth embodiment of the present invention will be described with reference to FIG. 28. FIG. 28 is a perspective view for explanation of a configuration of a bushing member in the fifteenth embodiment. In the fifteenth embodiment, a configuration of a bushing member will be described.

A bushing member 3A includes a bushing 31 and a bracket 32.

As with the first embodiment, the bushing 31 is made using an elastic material such as rubber or an elastic resin, and functions as a damping member that reduces vibration or the like of the stabilizer 1 transmitted from a road surface or the like. The bushing 31 includes two members (a first member 301 and a second member 302). In the fifteenth embodiment, the first member 301 and the second member 302 constituting the bushing 31 are divided in a direction parallel to the longitudinal direction of the body portion 2 and orthogonal to the first embodiment.

Even in the divided bushing 31 in the aspect according to the fifteenth embodiment, the members can be bonded to each other using the same bonding jig as in the first to fourteenth embodiments, and thus the same effect as in the first embodiment can be obtained.

Although the embodiments for carrying out the present invention have been described so far, the present invention should not be limited only to the above-described embodiments. For example, the present invention is applicable to a product manufactured by a thermal compression process.

In the embodiments described above, the example of using an IH coil as a heating member for a heat treatment has been described, but the heating member is not limited thereto, and known heating (e.g**.,** heating by energization or heating by hot air) can be used, and can be appropriately selected depending on the heating efficiency or the like.

In the embodiments described above, the example in which a bushing coupled to the body of a vehicle is bonded to a stabilizer has been described; however, the bonded member is not limited to the stabilizer. The present invention can be applied to any bonded member as long as the member is a bonded member that is interposed between the connection targets and to which a damping member for reducing vibration or the like between the connection targets is bonded, and a bonded member to which a damping member is bonded regardless of whether the bonded member is heated or unheated. Examples of the bonded member include a winding spring, a leaf spring, a torsion bar, and a disk spring in addition to the stabilizer. For example, in the winding spring, an insulator is used as the damping member.

As described above, the present invention can include various embodiments and the like not described herein, and various design changes and the like can be made without departing from the technical idea specified by the claims.

### Industrial Applicability

As described above, the bonding jig and the bonding method according to the present invention are suitable for preventing the reduction in workability while a damping member is reliably crimped onto a bonded member.

### Reference Signs List

- 1: STABILIZER
- 2: BODY PORTION
- 3, 3A: BUSHING MEMBER
- 10, 10A, 10B: BONDING JIG
- 11, 11A to 11M: FIRST BONDING MEMBER
- 12, 12A, 12B: SECOND BONDING MEMBER
- 13: WEDGE
- 31: BUSHING
- 32: BRACKET
- 111, 111A to 111E, 115: BOTTOM SURFACE PORTION
- 112, 112A to 112E, 116A, 122: FIRST WALL PORTION
- 112a, 113a: HOLE
- 112b, 113b: SWITCHING SURFACE
- 113, 113A to 113E, 116B, 123: SECOND WALL PORTION
- 114: COIL SPRING
- 115A, 118, 119a, 121, 124: BODY PORTION
- 115a, 118a: HOUSING PORTION
- 115b: BOTTOM SURFACE
- 115c: SIDE SURFACE
- 117A, 117C: FIRST MOVING MECHANISM
- 117B, 117D: SECOND MOVING MECHANISM
- 117a, 117d: FULCRUM PORTION
- 117b, 117e: EFFORT POINT PORTION
- 117c, 117f: ACTION PORTION
- 118b: FIRST PLATE
- 118c: SECOND PLATE
- 119b: FIRST HOLDING PORTION
- 119c: SECOND HOLDING PORTION
- 119d: SHAFT
- 119f, 119g: WALL PORTION
- 125: FIRST PIN
- 126: SECOND PIN
- 131: FIRST CLAW PORTION
- 132: SECOND CLAW PORTION
- 301: FIRST MEMBER
- 302: SECOND MEMBER

## Claims

1. A bonding jig (10, 10A, 10B) for crimping and bonding first and second members (301, 302) constituting a damping member to a bonded member, the bonding jig comprising:
a first bonding member (11, 11A-M) configured to hold the first member (301);
a second bonding member (12, 12A, 12B) configured to hold the second member (302) and cover the first bonding member (11, 11A-M) to crimp the first and second members (301, 302) onto the bonded member; and
**characterized by**
a switching mechanism configured to switch, in a space where the first bonding member (11, 11A-M) holds the first member (301), between a first state in which a gap is formed between the first bonding member (11, 11A-M) and a part of a side surface of the first member (301) continuous with a crimping surface with the second member (302) and a second state in which the gap is filled to control a position of the first member (301).

2. The bonding jig according to claim 1, wherein
the first bonding member (11C) includes
a bottom surface portion (115) on which the first member (301) is placed, and
first and second wall portions (116A, 116B) erected from the bottom surface portion (115),
the switching mechanism includes a spring (114A) configured to bias the first and second wall portions (116A, 116B) in directions away from each other,
in the first state, the first and second wall portions (116A, 116B) are positioned in directions away from each other, and
in the second state, the first and second wall portions (116A, 116B) are brought close to each other according to a load applied when the second bonding member is placed on the first bonding member (11C).

3. The bonding jig according to claim 1, wherein
the first bonding member (11C) includes
a bottom surface portion (111) on which the first member is placed, and
first and second wall portions (112, 113) erected from the bottom surface portion (111),
the switching mechanism includes
a hole formed (112a) on the first bonding member (11C), and
a pin (125) provided on the second bonding member and inserted into the hole (112a) when the second bonding member is placed on the first bonding member (11C),
in the first state, the first and second wall portions (112, 113) are positioned in directions away from each other, and
in the second state, the pin (125) is inserted into the hole (112a) to bring the first and second wall portions (112, 113) close to each other.

4. The bonding jig according to claim 1, wherein
the first bonding member includes
a bottom surface portion (115) on which the first member is placed, and
first and second wall portions (116A, 116B) erected from the bottom surface portion (115),
the switching mechanism includes
a fulcrum portion (117a) fixed to the bottom surface portion (115),
an effort point portion (117b) configured to move due to a load applied according to a distance between the second bonding member and the first bonding member, and
an action portion (117c) configured to move in synchronization with a movement of the effort point portion (117b) to move the first or second wall portion (116A, 116B),
the switching mechanism is provided for each of the first and second wall portions,
in the first state, the first and second wall portions (116A, 116B) are positioned in directions away from each other, and
in the second state, the first and second wall portions (116A, 116B) are brought close to each other.

5. The bonding jig according to claim 4**,** wherein
the fulcrum portion (117a) and the effort point portion (117b) are connected to each other in the switching mechanism, and
the effort point portion (117b) and the action portion (117c) are connected to each other.

6. The bonding jig according to claim 4, wherein
the fulcrum portion (117a) and the action portion (117c) are connected by a connecting member in the switching mechanism, and
the effort point portion (117b) moves to apply a load to the connecting member, and the action portion (117c) moves.

7. The bonding jig according to claim 1, wherein
the first bonding member includes a housing portion (115a) having a hole shape and configured to accommodate the first member (301),
the switching mechanism includes first and second claw portions (131, 132), and
in the second state, the first and second claw portions (131, 132) are positioned in a gap between the housing portion and the first member to fill the gap.

8. The bonding jig according to claim 1, wherein
the first bonding member includes a housing portion (115a) having a hole shape and configured to accommodate the first member (301), and
the switching mechanism includes first and second plates (118b, c) provided to be insertable into and removable from the housing portion (115a) and positioned in a gap between the housing portion (115a) and the first member (301).

9. The bonding jig according to claim 1, wherein
the first bonding member (11F) includes
a bottom surface portion, and
first and second holding portions (119b, c) formed by bending a plate-like member, placed on the bottom surface portion with one of bent portions facing each other, and configured to hold the first member (301),
the switching mechanism is a shaft (119d, e) provided at each of bent positions of the first and second holding portions (119b,c) and is configured to rotatably hold the first and second holding portions (119b,c),
in the first state, wall portions erecting from the bottom surface portion in the first and second holding portions (119b,c) are positioned in directions away from each other, and
in the second state, the wall portions are brought close to each other according to a load applied when the first member (301) is placed on the first bonding member (11F) .

10. The bonding jig according to claim 1, wherein
the first bonding member (11H) includes
a bottom surface portion (111A) on which the first member (301) is placed, and
first and second wall portions (112B, 113B) erected against the bottom surface portion (111A),
the switching mechanism includes
a first inclined portion (141) extending obliquely downward from the bottom surface portion (111A) and configured to movably support the first wall portion (112B), and
a second inclined portion (142) extending obliquely downward from a side of the bottom surface portion (111A) opposite to the first inclined portion (141) and configured to movably support the second wall portion (113B),
in the first state, the first and second wall portions (112B, 113B) are positioned in directions away from each other, and
in the second state, the first and second wall portions (112B, 113B) are brought close to each other.

11. The bonding jig according to claim 1, wherein
the first bonding member (11I) includes
a bottom surface portion (111B) on which the first member (301) is placed, and
first and second wall portions (112C, 113C) made of a magnetic material and erected from the bottom surface portion,
the switching mechanism includes first and second magnetic portions (143, 144) configured to generate magnetic force,
in the first state, the first and second wall portions (112C, 113C) are positioned in directions away from each other, and
in the second state, the first and second wall portions (112C, 113C) are brought close to each other by the magnetic force generated by the first and second magnetic portions (143, 144).

12. The bonding jig according to claim 1, wherein
the first bonding member (11J) includes
a bottom surface portion (111) on which the first member (301) is placed, and
first and second wall portions (112D, 113D) erected against the bottom surface portion,
the switching mechanism includes
a first screw portion (145) having a rotatable rod shape and configured to move the first wall portion (112D) in a longitudinal axis direction by rotation, and
a second screw portion (146) having a rotatable rod shape and configured to move the second wall portion (113D) in the longitudinal axis direction by rotation,
in the first state, the first and second wall portions (112D, 113D) are positioned in directions away from each other by the rotation of the first and second screw portions (145, 146), and
in the second state, the first and second wall portions (112D, 113D) are brought close to each other by the rotation of the first and second screw portions (145, 146).

13. The bonding jig according to claim 1, wherein
the first bonding member (11K) includes
a bottom surface portion (111C) on which the first member (301) is placed, and
first and second wall portions (112A, 113A) erected from the bottom surface portion,
the switching mechanism includes
a link mechanism (15) configured to move first and second support portions (152, 153) configured to respectively support the first and second walls (112A, 113A) in directions toward each other or in directions away from each other,
in the first state, the first and second wall portions (112A, 113A) are positioned in directions away from each other by movement of the first and second support portions (152, 153) by the link mechanism (15), and
in the second state, the first and second wall portions (112A, 113A) are brought close to each other by movement of the first and second support portions (152, 153) by the link mechanism (15).

14. The bonding jig according to claim 1, wherein
the first bonding member (11L) includes
a bottom surface portion (111D) on which the first member (301) is placed, and
first and second wall portions (112E, 113E) erected from the bottom surface portion (111D),
the switching mechanism includes
a switching surface (112b, 113b) formed on each of the first and second wall portions (112E, 113E), constituting a wall surface facing the bottom surface portion, and configured to form an acute angle with a wall surface facing the first member,
in the first state, the switching surfaces (112b, 113b) come into contact with the bottom surface portion (111D) to position the first and second wall portions (112E, 113E) in directions away from each other, and
in the second state, the switching surfaces (112b, 113b) are spaced from the bottom surface portion (111D) to bring the first and second wall portions (112E, 113E) close to each other.

15. The bonding jig according to claim 1, wherein
the first bonding member (11M) includes
a bottom surface portion (111E) on which the first member (301) is placed, and
first and second wall portions (112A, 113A) erected against the bottom surface portion (111E),
the switching mechanism is configured to move the first and second wall portions (112A, 113A) by blowing air or sucking air,
in the first state, the first and second wall portions (112A, 113A) are positioned in directions away from each other by blowing air, and
in the second state, the first and second wall portions (112A, 113A) are brought close to each other by sucking air.

16. A bonding method for crimping and bonding, to a bonded member, first and second members (301, 302) constituting a damping member by attaching the first and second members (301, 302) to a first bonding member (11, 11A-M) and a second bonding member (12, 12A, 12B) and placing the second bonding member (12, 12A, 12B) on the first bonding member (11, 11A-M), the bonding method comprising:
attaching the first member (301) to the first bonding member (11, 11A-M) in a first state in which a gap is formed between the first bonding member (11, 11A-M) and a part of a side surface of the first member (301) continuous with a crimping surface with the second member (302);
disposing a bonded member between the first and second members (301, 302), placing the second bonding member (12, 12A, 12B) to which the second member (302) is attached on the first bonding member (11, 11A-M) to bring the first and second members (301, 302) into contact with each other, and making a second state in which the gap is filled to control a position of the first member (301); and
bonding the first and second members (301, 302) to the bonded member by applying a thermocompression process on the first and second members (301, 302) and the bonded member.

## Patentansprüche

1. Verbindungsvorrichtung (10, 10A, 10B) zum Verpressen und Verbinden von ersten und zweiten Elementen (301, 302), die ein Dämpfungselement bilden, mit einem zu verbindenden Element, wobei die Verbindungsvorrichtung umfasst:
ein erstes Verbindungsbauteil (11, 11A-M), das ausgebildet ist, das erste Element (301) zu halten;
ein zweites Verbindungsbauteil (12, 12A, 12B), das ausgebildet ist, das zweite Element (302) zu halten und das erste Verbindungsbauteil (11, 11A-M) abzudecken, um die ersten und zweiten Elemente (301, 302) auf das zu verbindende Element zu verpressen; und
**gekennzeichnet durch**
einen Umschaltmechanismus, der ausgebildet ist, in einem Raum, in dem das erste Verbindungsbauteil (11, 11A-M) das erste Element (301) hält, zwischen einem ersten Zustand, in dem ein Spalt zwischen dem ersten Verbindungsbauteil (11, 11A-M) und einem Teil einer Seitenfläche des ersten Elements (301), der mit einer Verpressungsfläche mit dem zweiten Element (302) kontinuierlich ist, gebildet ist, und einem zweiten Zustand, in dem der Spalt gefüllt ist, umzuschalten, um eine Position des ersten Elements (301) zu steuern.

2. Verbindungsvorrichtung nach Anspruch 1, wobei
das erste Verbindungsbauteil (11C) Folgendes einschließt
einen Bodenflächenabschnitt (115), auf dem das erste Element (301) angeordnet ist, und
erste und zweite Wandabschnitte (116A, 116B), die von dem Bodenflächenabschnitt (115) aufgerichtet sind,
der Umschaltmechanismus eine Feder (114A) einschließt, die ausgebildet ist, die ersten und zweiten Wandabschnitte (116A, 116B) in Richtungen voneinander weg vorzuspannen,
im ersten Zustand die ersten und zweiten Wandabschnitte (116A, 116B) in Richtungen voneinander weg positioniert sind, und
im zweiten Zustand die ersten und zweiten Wandabschnitte (116A, 116B) entsprechend einer Last, die aufgebracht wird, wenn das zweite Verbindungsbauteil auf dem ersten Verbindungsbauteil (11C) angeordnet wird, nahe zueinandergebracht werden.

3. Verbindungsvorrichtung nach Anspruch 1, wobei
das erste Verbindungsbauteil (11C) Folgendes einschließt
einen Bodenflächenabschnitt (111), auf dem das erste Element angeordnet ist, und
erste und zweite Wandabschnitte (112, 113), die von dem Bodenflächenabschnitt (111) aufgerichtet sind,
der Umschaltmechanismus Folgendes einschließt
ein an dem ersten Verbindungsbauteil (11C) gebildetes Loch (112a), und
einen an dem zweiten Verbindungsbauteil vorgesehenen Stift (125), und der in das Loch (112a) eingeführt wird, wenn das zweite Verbindungsbauteil auf dem ersten Verbindungsbauteil (11C) angeordnet wird,
im ersten Zustand die ersten und zweiten Wandabschnitte (112, 113) in Richtungen voneinander weg positioniert sind, und
im zweiten Zustand der Stift (125) in das Loch (112a) eingeführt wird, um die ersten und zweiten Wandabschnitte (112, 113) nahe zueinander zu bringen.

4. Verbindungsvorrichtung nach Anspruch 1, wobei
das erste Verbindungsbauteil Folgendes einschließt
einen Bodenflächenabschnitt (115), auf dem das erste Element angeordnet ist, und
erste und zweite Wandabschnitte (116A, 116B), die von dem Bodenflächenabschnitt (115) aufgerichtet sind,
der Umschaltmechanismus Folgendes einschließt
einen an dem Bodenflächenabschnitt (115) befestigten Drehpunktabschnitt (117a),
einen Kraftangriffspunktabschnitt (117b), der ausgebildet ist, sich aufgrund einer entsprechend einem Abstand zwischen dem zweiten Verbindungsbauteil und dem ersten Verbindungsbauteil aufgebrachten Last zu bewegen, und
einen Wirkabschnitt (117c), der ausgebildet ist, sich synchron mit einer Bewegung des Kraftangriffspunktabschnitts (117b) zu bewegen, um den ersten oder zweiten Wandabschnitt (116A, 116B) zu bewegen,
der Umschaltmechanismus für jeden der ersten und zweiten Wandabschnitte vorgesehen ist,
im ersten Zustand die ersten und zweiten Wandabschnitte (116A, 116B) in Richtungen voneinander weg positioniert sind, und
im zweiten Zustand die ersten und zweiten Wandabschnitte (116A, 116B) nahe zueinandergebracht werden.

5. Verbindungsvorrichtung nach Anspruch 4, wobei
der Drehpunktabschnitt (117a) und der Kraftangriffspunktabschnitt (117b) in dem Umschaltmechanismus miteinander verbunden sind, und
der Kraftangriffspunktabschnitt (117b) und der Wirkabschnitt (117c) miteinander verbunden sind.

6. Verbindungsvorrichtung nach Anspruch 4, wobei
der Drehpunktabschnitt (117a) und der Wirkabschnitt (117c) in dem Umschaltmechanismus durch ein Verbindungselement verbunden sind, und
der Kraftangriffspunktabschnitt (117b) sich bewegt, um eine Last auf das Verbindungselement aufzubringen, und der Wirkabschnitt (117c) sich bewegt.

7. Verbindungsvorrichtung nach Anspruch 1, wobei
das erste Verbindungsbauteil einen Gehäuseabschnitt (115a) mit einer Lochform einschließt, und der ausgebildet ist, das erste Element (301) aufzunehmen,
der Umschaltmechanismus erste und zweite Klauenabschnitte (131, 132) einschließt, und
im zweiten Zustand die ersten und zweiten Klauenabschnitte (131, 132) in einem Spalt zwischen dem Gehäuseabschnitt und dem ersten Element positioniert sind, um den Spalt zu füllen.

8. Verbindungsvorrichtung nach Anspruch 1, wobei
das erste Verbindungsbauteil einen Gehäuseabschnitt (115a) mit einer Lochform einschließt, der ausgebildet ist, das erste Element (301) aufzunehmen, und
der Umschaltmechanismus erste und zweite Platten (118b, c) einschließt, die vorgesehen sind, in den Gehäuseabschnitt (115a) eingeführt und aus diesem entfernt zu werden, und die in einem Spalt zwischen dem Gehäuseabschnitt (115a) und dem ersten Element (301) positioniert sind.

9. Verbindungsvorrichtung nach Anspruch 1, wobei
das erste Verbindungsbauteil (11F) Folgende einschließt
einen Bodenflächenabschnitt, und
erste und zweite Halteabschnitte (119b, c), die durch Biegen eines plattenförmigen Elements gebildet sind, die auf dem Bodenflächenabschnitt mit einem der gebogenen Abschnitte zueinander gerichtet angeordnet sind, und die ausgebildet sind, das erste Element (301) zu halten,
der Umschaltmechanismus eine Achse (119d, e) ist, die an jeder der Biegepositionen der ersten und zweiten Halteabschnitte (119b, c) vorgesehen ist und ausgebildet ist, die ersten und zweiten Halteabschnitte (119b, c) drehbar zu halten,
im ersten Zustand Wandabschnitte, die sich in den ersten und zweiten Halteabschnitten (119b, c) von dem Bodenflächenabschnitt aufrichten, in Richtungen voneinander weg positioniert sind, und
im zweiten Zustand die Wandabschnitte entsprechend einer Last, die aufgebracht wird, wenn das erste Element (301) auf dem ersten Verbindungsbauteil (11F) angeordnet wird, nahe zueinandergebracht werden.

10. Verbindungsvorrichtung nach Anspruch 1, wobei
das erste Verbindungsbauteil (11H) Folgendes einschließt
einen Bodenflächenabschnitt (111A), auf dem das erste Element (301) angeordnet ist, und
erste und zweite Wandabschnitte (112B, 113B), die gegen den Bodenflächenabschnitt (111A) aufgerichtet sind,
der Umschaltmechanismus Folgendes einschließt
einen ersten Schrägabschnitt (141), der sich schräg nach unten von dem Bodenflächenabschnitt (111A) erstreckt und ausgebildet ist, den ersten Wandabschnitt (112B) beweglich zu stützen, und
einen zweiten Schrägabschnitt (142), der sich schräg nach unten von einer dem ersten Schrägabschnitt (141) gegenüberliegenden Seite des Bodenflächenabschnitts (111A) erstreckt und ausgebildet ist, den zweiten Wandabschnitt (113B) beweglich zu stützen,
im ersten Zustand die ersten und zweiten Wandabschnitte (112B, 113B) in Richtungen voneinander weg positioniert sind, und
im zweiten Zustand die ersten und zweiten Wandabschnitte (112B, 113B) nahe zueinandergebracht werden.

11. Verbindungsvorrichtung nach Anspruch 1, wobei
das erste Verbindungsbauteil (11I) Folgendes einschließt
einen Bodenflächenabschnitt (111B), auf dem das erste Element (301) angeordnet ist, und
erste und zweite Wandabschnitte (112C, 113C), die aus einem magnetischen Material gebildet sind und von dem Bodenflächenabschnitt aufgerichtet sind,
der Umschaltmechanismus erste und zweite magnetische Abschnitte (143, 144) einschließt, die ausgebildet sind, eine magnetische Kraft zu erzeugen,
im ersten Zustand die ersten und zweiten Wandabschnitte (112C, 113C) in Richtungen voneinander weg positioniert sind, und
im zweiten Zustand die ersten und zweiten Wandabschnitte (112C, 113C) durch die von den ersten und zweiten magnetischen Abschnitten (143, 144) erzeugte magnetische Kraft nahe zueinandergebracht werden.

12. Verbindungsvorrichtung nach Anspruch 1, wobei
das erste Verbindungsbauteil (11J) Folgendes einschließt
einen Bodenflächenabschnitt (111), auf dem das erste Element (301) angeordnet ist, und
erste und zweite Wandabschnitte (112D, 113D), die gegen den Bodenflächenabschnitt aufgerichtet sind,
der Umschaltmechanismus Folgendes einschließt
einen ersten Schraubenabschnitt (145) mit einer drehbaren Stabform, der ausgebildet ist, den ersten Wandabschnitt (112D) durch Drehung in einer Längsachsenrichtung zu bewegen, und
einen zweiten Schraubenabschnitt (146) mit einer drehbaren Stabform, der ausgebildet ist, den zweiten Wandabschnitt (113D) durch Drehung in der Längsachsenrichtung zu bewegen,
im ersten Zustand die ersten und zweiten Wandabschnitte (112D, 113D) durch die Drehung der ersten und zweiten Schraubenabschnitte (145, 146) in Richtungen voneinander weg positioniert sind, und
im zweiten Zustand die ersten und zweiten Wandabschnitte (112D, 113D) durch die Drehung der ersten und zweiten Schraubenabschnitte (145, 146) nahe zueinandergebracht werden.

13. Verbindungsvorrichtung nach Anspruch 1, wobei
das erste Verbindungsbauteil (11K) Folgendes einschließt
einen Bodenflächenabschnitt (111C), auf dem das erste Element (301) angeordnet ist, und
erste und zweite Wandabschnitte (112A, 113A), die von dem Bodenflächenabschnitt aufgerichtet sind,
der Umschaltmechanismus Folgendes einschließt
einen Gestängemechanismus (15), der ausgebildet ist, erste und zweite Stützabschnitte (152, 153), die ausgebildet sind, jeweils die erste und die zweite Wand (112A, 113A) zu stützen, in Richtungen zueinander oder in Richtungen voneinander weg zu bewegen,
im ersten Zustand die ersten und zweiten Wandabschnitte (112A, 113A) durch Bewegung der ersten und zweiten Stützabschnitte (152, 153) durch den Gestängemechanismus (15) in Richtungen voneinander weg positioniert sind, und
im zweiten Zustand die ersten und zweiten Wandabschnitte (112A, 113A) durch Bewegung der ersten und zweiten Stützabschnitte (152, 153) durch den Gestängemechanismus (15) nahe zueinandergebracht werden.

14. Verbindungsvorrichtung nach Anspruch 1, wobei
das erste Verbindungsbauteil (11L) Folgendes einschließt
einen Bodenflächenabschnitt (111D), auf dem das erste Element (301) angeordnet ist, und
erste und zweite Wandabschnitte (112E, 113E), die von dem Bodenflächenabschnitt (111D) aufgerichtet sind,
der Umschaltmechanismus Folgendes einschließt
eine Umschaltfläche (112b, 113b), die an jedem der ersten und zweiten Wandabschnitte (112E, 113E) gebildet ist, eine dem Bodenflächenabschnitt zugewandte Wandfläche bildet und ausgebildet ist, mit einer dem ersten Element zugewandten Wandfläche einen spitzen Winkel zu bilden,
im ersten Zustand die Umschaltflächen (112b, 113b) mit dem Bodenflächenabschnitt (111D) in Kontakt kommen, um die ersten und zweiten Wandabschnitte (112E, 113E) in Richtungen voneinander weg zu positionieren, und
im zweiten Zustand die Umschaltflächen (112b, 113b) von dem Bodenflächenabschnitt (111D) beabstandet sind, um die ersten und zweiten Wandabschnitte (112E, 113E) nahe zueinander zu bringen.

15. Verbindungsvorrichtung nach Anspruch 1, wobei
das erste Verbindungsbauteil (11M) Folgendes einschließt
einen Bodenflächenabschnitt (111E), auf dem das erste Element (301) angeordnet ist, und
erste und zweite Wandabschnitte (112A, 113A), die gegen den Bodenflächenabschnitt (111E) aufgerichtet sind,
der Umschaltmechanismus ausgebildet ist, die ersten und zweiten Wandabschnitte (112A, 113A) durch Blasen von Luft oder Saugen von Luft zu bewegen,
im ersten Zustand die ersten und zweiten Wandabschnitte (112A, 113A) durch Blasen von Luft in Richtungen voneinander weg positioniert sind, und
im zweiten Zustand die ersten und zweiten Wandabschnitte (112A, 113A) durch Saugen von Luft nahe zueinandergebracht werden.

16. Verbindungsverfahren zum Verpressen und Verbinden von ersten und zweiten Elementen (301, 302), die ein Dämpfungselement bilden, mit einem zu verbindenden Element durch Anbringen der ersten und zweiten Elemente (301, 302) an einem ersten Verbindungsbauteil (11, 11A-M) und einem zweiten Verbindungsbauteil (12, 12A, 12B) und Anordnen des zweiten Verbindungsbauteils (12, 12A, 12B) auf dem ersten Verbindungsbauteil (11, 11A-M), wobei das Verbindungsverfahren umfasst:
Anbringen des ersten Elements (301) an dem ersten Verbindungsbauteil (11, 11AM) in einem ersten Zustand, in dem ein Spalt zwischen dem ersten Verbindungsbauteil (11, 11A-M) und einem Teil einer Seitenfläche des ersten Elements (301), der mit einer Verpressungsfläche mit dem zweiten Element (302) anschließt, gebildet ist;
Anordnen eines zu verbindenden Elements zwischen den ersten und zweiten Elementen (301, 302), Anordnen des zweiten Verbindungsbauteils (12, 12A, 12B), an dem das zweite Element (302) angebracht ist, auf dem ersten Verbindungsbauteil (11, 11A-M), um die ersten und zweiten Elemente (301, 302) miteinander in Kontakt zu bringen, und Herstellen eines zweiten Zustands, in dem der Spalt gefüllt ist, um eine Position des ersten Elements (301) zu steuern; und
Verbinden der ersten und zweiten Elemente (301, 302) mit dem zu verbindenden Element durch Anwenden eines Thermokompressionsverfahrens auf die ersten und zweiten Elemente (301, 302) und das zu verbindende Element.

## Revendications

1. Outil de positionnement (10, 10A, 10B) en vue d'une liaison, pour sertir et lier, à un élément à lier, des premier et deuxième éléments (301, 302) constituant un élément amortisseur, l'outil de positionnement en vue d'une liaison comprenant :
un premier organe de liaison (11, 11A-M), configuré de manière à maintenir le premier élément (301) ;
un deuxième organe de liaison (12, 12A, 12B), configuré de manière à maintenir le deuxième élément (302) et à recouvrir le premier organe de liaison (11, 11A-M) pour sertir les premier et deuxième éléments (301, 302) sur l'élément à lier ; et
**caractérisé par**
un mécanisme de commutation, configuré de manière à commuter, dans un espace dans lequel le premier organe de liaison (11, 11A-M) maintient le premier élément (301), entre un premier état, dans lequel un espace libre est formé entre le premier organe de liaison (11, 11A-M) et une partie d'une surface latérale du premier élément (301) continue avec une surface de sertissage avec le deuxième élément (302), et un deuxième état, dans lequel l'espace libre est comblé afin de commander une position du premier élément (301).

2. Outil de positionnement en vue d'une liaison, selon la revendication 1, dans lequel
le premier organe de liaison (11C) comprend
une portion de surface de fond (115) sur laquelle le premier élément (301) est placé, et
des première et deuxième portions de paroi (116A, 116B) se dressant à partir de la portion de surface de fond (115),
le mécanisme de commutation comprend un ressort (114A) configuré de manière à solliciter les première et deuxième portions de paroi (116A, 116B) dans des directions d'éloignement de l'une par rapport à l'autre,
dans le premier état, les première et deuxième portions de paroi (116A, 116B) sont positionnées dans des directions d'éloignement de l'une par rapport à l'autre, et
dans le deuxième état, les première et deuxième portions de paroi (116A, 116B) sont rapprochées l'une de l'autre selon une charge appliquée lorsque le deuxième organe de liaison est placé sur le premier organe de liaison (11C).

3. Outil de positionnement en vue d'une liaison, selon la revendication 1, dans lequel
le premier organe de liaison (11C) comprend
une portion de surface de fond (111) sur laquelle le premier élément est placé, et
des première et deuxième portions de paroi (112, 113) se dressant à partir de la portion de surface de fond (111),
le mécanisme de commutation comprend
un trou (112a) formé sur le premier organe de liaison (11C), et
une broche (125) prévue sur le deuxième organe de liaison et insérée dans le trou (112a) lorsque le deuxième organe de liaison est placé sur le premier organe de liaison (11C),
dans le premier état, les première et deuxième portions de paroi (112, 113) sont positionnées dans des directions d'éloignement de l'une par rapport à l'autre, et
dans le deuxième état, la broche (125) est insérée dans le trou (112a) de manière à rapprocher les première et deuxième portions de paroi (112, 113) l'une de l'autre.

4. Outil de positionnement en vue d'une liaison, selon la revendication 1, dans lequel
le premier organe de liaison comprend
une portion de surface de fond (115), sur laquelle le premier élément est placé, et
des première et deuxième portions de paroi (116A, 116B), se dressant à partir de la portion de surface de fond (115),
le mécanisme de commutation comprend
une portion d'appui (117a), fixée à la portion de surface de fond (115),
une portion de point d'effort (117b), configurée de manière à se déplacer en raison d'une charge appliquée selon une distance entre le deuxième organe de liaison et le premier organe de liaison, et
une portion d'action (117c), configurée de manière à se déplacer en synchronisation avec un déplacement de la portion de point d'effort (117b) afin de déplacer la première ou la deuxième portion de paroi (116A, 116B),
le mécanisme de commutation est prévu pour chacune des première et deuxième portions de paroi,
dans le premier état, les première et deuxième portions de paroi (116A, 116B) sont positionnées dans des directions d'éloignement de l'une par rapport à l'autre, et
dans le deuxième état, les première et deuxième portions de paroi (116A, 116B) sont rapprochées l'une de l'autre.

5. Outil de positionnement en vue d'une liaison, selon la revendication 4, dans lequel
la portion d'appui (117a) et la portion de point d'effort (117b) sont reliées l'une à l'autre dans le mécanisme de commutation, et
la portion de point d'effort (117b) et la portion d'action (117c) sont reliées l'une à l'autre.

6. Outil de positionnement en vue d'une liaison, selon la revendication 4, dans lequel
la portion d'appui (117a) et la portion d'action (117c) sont reliées par une pièce de liaison dans le mécanisme de commutation, et
la portion de point d'effort (117b) se déplace de manière à appliquer une charge à la pièce de liaison, et la portion d'action (117c) se déplace.

7. Outil de positionnement en vue d'une liaison, selon la revendication 1, dans lequel
le premier organe de liaison comprend une portion de logement (115a), présentant une forme de trou et configurée de manière à recevoir le premier élément (301),
le mécanisme de commutation comprend des première et deuxième portions de griffe (131, 132), et
dans le deuxième état, les première et deuxième portions de griffe (131, 132) sont positionnées dans un espace libre entre la portion de logement et le premier élément pour combler l'espace libre.

8. Outil de positionnement en vue d'une liaison, selon la revendication 1, dans lequel
le premier organe de liaison comprend une portion de logement (115a), présentant une forme de trou et configurée de manière à recevoir le premier élément (301), et
le mécanisme de commutation comprend des première et deuxième plaques (118b, c) prévues de manière à être aptes à être insérées dans la portion de logement (115a) et à être aptes à être retirées de celle-ci, et positionnées dans un espace libre entre la portion de logement (115a) et le premier élément (301).

9. Outil de positionnement en vue d'une liaison, selon la revendication 1, dans lequel
le premier organe de liaison (11F) comprend
une portion de surface de fond, et
des première et deuxième portions de maintien (119b, c) formées par pliage d'un élément en forme de plaque, placées sur la portion de surface de fond avec les portions pliées placées en face l'une de l'autre, et configurées de manière à maintenir le premier élément (301),
le mécanisme de commutation est un arbre (119d, e) prévu au niveau de positions pliées des première et deuxième portions de maintien (119b, c), à chacune de ces portions, et est configuré de manière à maintenir de manière rotative les première et deuxième portions de maintien (119b, c),
dans le premier état, des portions de paroi se dressant à partir de la portion de surface de fond dans les première et deuxième portions de maintien (119b, c) sont positionnées dans des directions d'éloignement de l'une par rapport à l'autre, et
dans le deuxième état, les portions de paroi sont rapprochées l'une de l'autre selon une charge appliquée lorsque le premier élément (301) est placé sur le premier organe de liaison (11F).

10. Outil de positionnement en vue d'une liaison, selon la revendication 1, dans lequel
le premier organe de liaison (11H) comprend
une portion de surface de fond (111A), sur laquelle le premier élément (301) est placé, et
des première et deuxième portions de paroi (112B, 113B), dressées contre la portion de surface de fond (111A),
le mécanisme de commutation comprend
une première portion inclinée (141), s'étendant obliquement vers le bas depuis la portion de surface de fond (111A) et configurée de manière à supporter de manière mobile la première portion de paroi (112B), et
une deuxième portion inclinée (142), s'étendant obliquement vers le bas depuis un côté de la portion de surface de fond (111A) opposé à la première portion inclinée (141) et configurée de manière à supporter de manière mobile la deuxième portion de paroi (113B),
dans le premier état, les première et deuxième portions de paroi (112B, 113B) sont positionnées dans des directions d'éloignement de l'une par rapport à l'autre, et
dans le deuxième état, les première et deuxième portions de paroi (112B, 113B) sont rapprochées l'une de l'autre.

11. Outil de positionnement en vue d'une liaison, selon la revendication 1, dans lequel
le premier organe de liaison (11I) comprend
une portion de surface de fond (111B), sur laquelle le premier élément (301) est placé, et
des première et deuxième portions de paroi (112C, 113C), en un matériau magnétique et se dressant à partir de la portion de surface de fond,
le mécanisme de commutation comprend des première et deuxième portions magnétiques (143, 144), configurées de manière à générer une force magnétique,
dans le premier état, les première et deuxième portions de paroi (112C, 113C) sont positionnées dans des directions d'éloignement de l'une par rapport à l'autre, et
dans le deuxième état, les première et deuxième portions de paroi (112C, 113C) sont rapprochées l'une de l'autre par la force magnétique générée par les première et deuxième portions magnétiques (143, 144).

12. Outil de positionnement en vue d'une liaison, selon la revendication 1, dans lequel
le premier organe de liaison (11J) comprend
une portion de surface de fond (111), sur laquelle le premier élément (301) est placé, et
des première et deuxième portions de paroi (112D, 113D), dressées contre la portion de surface de fond,
le mécanisme de commutation comprend
une première portion à vis (145), présentant une forme de tige rotative et configurée de manière à déplacer la première portion de paroi (112D) dans une direction d'axe longitudinal par rotation, et
une deuxième portion à vis (146), présentant une forme de tige rotative et configurée de manière à déplacer la deuxième portion de paroi (113D) dans la direction d'axe longitudinal par rotation,
dans le premier état, les première et deuxième portions de paroi (112D, 113D) sont positionnées dans des directions d'éloignement de l'une par rapport à l'autre par la rotation des première et deuxième portions à vis (145, 146), et
dans le deuxième état, les première et deuxième portions de paroi (112D, 113D) sont rapprochées l'une de l'autre par la rotation des première et deuxième portions à vis (145, 146).

13. Outil de positionnement en vue d'une liaison, selon la revendication 1, dans lequel
le premier organe de liaison (11K) comprend
une portion de surface de fond (111C), sur laquelle le premier élément (301) est placé, et
des première et deuxième portions de paroi (112A, 113A), se dressant à partir de la portion de surface de fond,
le mécanisme de commutation comprend
un mécanisme (15) à biellettes, configuré de manière à déplacer des première et deuxième portions de support (152, 153) configurées de manière à supporter respectivement les première et deuxième portions de paroi (112A, 113A) dans des directions allant l'une vers l'autre ou dans des directions d'éloignement de l'une par rapport à l'autre,
dans le premier état, les première et deuxième portions de paroi (112A, 113A) sont positionnées dans des directions d'éloignement de l'une par rapport à l'autre par déplacement des première et deuxième portions de support (152, 153) par le mécanisme (15) à biellettes, et
dans le deuxième état, les première et deuxième portions de paroi (112A, 113A) sont rapprochées l'une de l'autre par déplacement des première et deuxième portions de support (152, 153) par le mécanisme (15) à biellettes.

14. Outil de positionnement en vue d'une liaison, selon la revendication 1, dans lequel
le premier organe de liaison (11L) comprend
une portion de surface de fond (111D), sur laquelle le premier élément (301) est placé, et
des première et deuxième portions de paroi (112E, 113E), se dressant à partir de la portion de surface de fond (111D),
le mécanisme de commutation comprend
une surface de commutation (112b, 113b), formée sur chacune des première et deuxième portions de paroi (112E, 113E), constituant une surface de paroi tournées vers la portion de surface de fond, et configurée de manière à former un angle aigu avec une surface de paroi tournées vers le premier élément,
dans le premier état, les surfaces de commutation (112b, 113b) viennent en contact avec la portion de surface de fond (111D) pour positionner les première et deuxième portions de paroi (112E, 113E) dans des directions d'éloignement de l'une par rapport à l'autre, et
dans le deuxième état, les surfaces de commutation (112b, 113b) sont espacées de la portion de surface de fond (111D) de manière à rapprocher les première et deuxième portions de paroi (112E, 113E) l'une de l'autre.

15. Outil de positionnement en vue d'une liaison, selon la revendication 1, dans lequel
le premier organe de liaison (11M) comprend
une portion de surface de fond (111E), sur laquelle le premier élément (301) est placé, et
des première et deuxième portions de paroi (112A, 113A), dressées contre la portion de surface de fond (111E),
le mécanisme de commutation est configuré de manière à déplacer les première et deuxième portions de paroi (112A, 113A) par soufflage d'air ou aspiration d'air,
dans le premier état, les première et deuxième portions de paroi (112A, 113A) sont positionnées dans des directions d'éloignement de l'une par rapport à l'autre par soufflage d'air, et
dans le deuxième état, les première et deuxième portions de paroi (112A, 113A) sont rapprochées l'une de l'autre par aspiration d'air.

16. Procédé de liaison destiné au sertissage et à la liaison, à un élément à lier, de premier et
deuxième éléments (301, 302) constituant un élément amortisseur, en fixant les premier et deuxième éléments (301, 302) à un premier organe de liaison (11, 11A-M) et à un deuxième organe de liaison (12, 12A, 12B), et en plaçant le deuxième organe de liaison (12, 12A, 12B) sur le premier organe de liaison (11, 11A-M), le procédé de liaison comprenant :
le fait de fixer le premier élément (301) au premier organe de liaison (11, 11A-M) dans un premier état dans lequel un espace libre est formé entre le premier organe de liaison (11, 11A-M) et une partie d'une surface latérale du premier élément (301) continue avec une surface de sertissage avec le deuxième élément (302) ;
le fait de disposer un élément à lier entre les premier et deuxième éléments (301, 302), placer le deuxième organe de liaison (12, 12A, 12B) auquel le deuxième élément (302) est fixé sur le premier organe de liaison (11, 11A-M) pour amener les premier et deuxième éléments (301, 302) en contact l'un avec l'autre, et réaliser un deuxième état dans lequel l'espace libre est comblé afin de commander une position du premier élément (301) ; et
le fait de lier les premier et deuxième éléments (301, 302) à l'élément à lier en appliquant un procédé de thermocompression sur les premier et deuxième éléments (301, 302) et sur l'élément à lier.
